# FASCICULE DE BREVET EUROPEEN

(11) **EP 4 224 442 B1**
(45) Date de publication et mention de la délivrance du brevet: **28.02.2024**
(21) Numéro de dépôt: 23153554.3
(22) Date de dépôt: 26.01.2023
(51) Int. Cl.: G07C 9/00, H04L 9/14

(54) **PROCÉDÉ DE CONTRÔLE D'ACCÈS À DES BÂTIMENTS**
VERFAHREN ZUR STEUERUNG DES ZUGANGS ZU GEBÄUDEN
METHOD FOR CONTROLLING ACCESS TO BUILDINGS

(30) Priorité: 03.02.2022 FR 2200949
(43) Date de publication de la demande: 09.08.2023
(73) Titulaire: Cogelec, 85290 Mortagne-sur-Sèvre (FR); Synacktiv, 75002 Paris (FR)
(72) Inventeur: KLUBA, Patrice, 85290 MORTAGNE-SUR-SÈVRE (FR); CARPENTIER, Jean, 85290 MORTAGNE-SUR-SÈVRE (FR)
(74) Mandataire: INNOV-GROUP

(56) Documents cités:
- EP-A2- 1 321 901
- WO-A1-2016/023558

## Description

L'invention concerne un procédé et un système de contrôle d'accès à des bâtiments. L'invention concerne également un terminal mobile et une serrure électronique pour la réalisation de ce système de contrôle d'accès.

Le déposant connaît un procédé de contrôle d'accès dans lequel, pour déverrouiller une serrure électronique, un terminal mobile transmet un certificat cryptographique à la serrure électronique. Ce certificat cryptographique contient typiquement un identifiant du terminal mobile, un identifiant de la serrure électronique à ouvrir et un code d'accès. De plus, ce certificat cryptographique comporte aussi une signature numérique construite à partir de l'identifiant du terminal mobile, de l'identifiant de la serrure électronique et du code d'accès. Cette signature numérique est un cryptogramme obtenu en chiffrant un condensat de l'identifiant du terminal mobile, de la serrure électronique et du code d'accès avec une clé secrète et en mettant en oeuvre un algorithme de chiffrement asymétrique. La clé secrète n'est pas enregistrée dans le terminal mobile, de sorte qu'il n'est pas possible de construire, seulement à partir des données contenues dans ce terminal mobile, un nouveau certificat cryptographique pour, par exemple, déverrouiller une autre serrure électronique . Ainsi, si les données contenues dans ce terminal mobile sont compromises, cela ne remet pas en cause la sécurité du système.

Les serrures électroniques contiennent seulement la clé publique qui permet de vérifier l'intégrité et l'authenticité du certificat cryptographique reçu. Si l'intégrité et l'authenticité du certificat graphique reçu est confirmée, la serrure électronique se déplace dans son état déverrouillé pour autoriser l'accès au bâtiment. Dans le cas contraire, l'accès est refusé.

Un tel procédé est par exemple divulgué dans la demande EP1321901.

Ce procédé présente plusieurs avantages. Premièrement, il n'est pas nécessaire d'établir, entre la serrure et le terminal mobile, un canal sécurisé puis ensuite d'utiliser ce canal sécurisé pour transmettre des autorisations d'accès à la serrure électronique. En effet, pour établir un canal sécurisé, il faut générer dans le terminal mobile et dans la serrure électronique une clé de session qui varie à chaque fois que le terminal mobile est présenté devant cette serrure électronique. Ensuite, cette clé de session doit être utilisée pour chiffrer, à l'aide d'un algorithme de chiffrement symétrique, toutes les informations échangées entre le terminal mobile et la serrure électronique. Puisque aucun canal sécurisé n'est établi dans le procédé connu du déposant, cela évite d'avoir à générer de telles clés de session. Cela limite donc le nombre de trames d'informations à échanger entre le terminal mobile et la serrure électronique.

Deuxièmement, dans le procédé de la demande EP1321901, la clé privée qui permet de générer un certificat cryptographique qui permet de déverrouiller une serrure électronique n'est pas contenue dans le terminal mobile ni dans la serrure électronique à déverrouiller. Ainsi, même si la sécurité de la serrure électronique ou du terminal mobile est compromise, il n'est pas possible de construire de nouveaux certificats cryptographiques valides permettant de déverrouiller d'autres serrures électroniques seulement à partir des informations contenues dans cette serrure électronique ou dans ce terminal mobile. Dès lors, le fait que la sécurité d'une serrure électronique ou d'un terminal mobile soit compromise ne remet pas en cause la sécurité du système de contrôle d'accès.

Troisièmement, comme le souligne la demande EP1321901, ce procédé de contrôle d'accès est avantageux en ce qu'il faut simplement configurer les terminaux mobiles et non pas les serrures électroniques pour autoriser le déverrouillage de ces serrures électroniques. Plus précisément, pour qu'un terminal mobile soit autorisé à déverrouiller une serrure électronique particulière, il suffit d'enregistrer dans la mémoire de ce terminal mobile le certificat cryptographique correspondant à ce terminal mobile et à cette serrure électronique. Il n'est pas nécessaire de programmer la serrure électronique. Dès lors, les serrures électroniques n'ont pas besoin d'être directement raccordées à un réseau de télécommunication ou similaire.

Toutefois, la vérification d'un certificat cryptographique nécessite la mise en oeuvre d'algorithmes de chiffrement asymétrique. Ces algorithmes sont complexes et entraînent une consommation d'énergie supérieure à celle nécessaire, par exemple, à la mise en oeuvre d'algorithmes de chiffrement/déchiffrement symétrique. Or, dans la majorité des systèmes de contrôle d'accès, les terminaux mobiles et/ou les serrures électroniques sont alimentés par une pile ou une batterie. Il est donc souhaitable de disposer d'un procédé de contrôle d'accès qui présente les mêmes avantages que celui de la demande EP1321901 mais tout en permettant l'utilisation d'algorithmes de chiffrement symétrique à la place des algorithmes de chiffrement asymétriques.

De plus, le procédé de la demande EP1321901 impose de programmer chaque terminal mobile pour pouvoir ouvrir une serrure électronique. Or, de temps en temps, plutôt que de programmer un terminal mobile, il est préférable, par exemple parce que c'est plus simple, de programmer la serrure électronique plutôt que le terminal mobile. Ainsi, il est également souhaitable de disposer d'un procédé de contrôle d'accès qui présente les mêmes avantages que celui de la demande EP1321901 tout en autorisant en plus un fonctionnement inverse. Le fonctionnement inverse consiste à pouvoir programmer une serrure électronique pour qu'elle se déverrouille lorsqu'un terminal mobile particulier est présenté alors que ce terminal mobile particulier n'a pas été, au préalable, programmé pour ouvrir cette serrure électronique particulière. De plus, ce fonctionnement inverse ne doit pas diminuer la sécurité du système de contrôle d'accès. Par exemple, il ne serait pas acceptable de prévoir que la serrure électronique transmette au terminal mobile un certificat cryptographique et que le déverrouillage de la serrure électronique soit autorisé dès que le terminal mobile confirme la validité, l'intégrité et l'authenticité du certificat cryptographique reçu. En effet, un terminal mobile pourrait facilement être modifié pour répondre systématiquement que le certificat cryptographique reçu est valide alors que ce n'est pas le cas et ainsi déclencher le déverrouillage de la serrure électronique.

Dans les procédés connus, lorsqu'un terminal mobile doit être invalidé, il est nécessaire de reprogrammer ce terminal ou de reprogrammer la serrure électronique pour que celle-ci ne se déplace plus dans son état déverrouillé lorsque ce terminal mobile est présenté. Dans ce texte, "invalider un terminal mobile" signifie annuler les autorisations d'accès du terminal mobile pour qu'il ne puisse plus déverrouiller une serrure électronique qu'il pouvait, par le passé, déverrouiller. Par exemple, dans le cas du procédé de la demande EP1321901, un terminal mobile peut être invalidé en ne lui transmettant pas le certificat cryptographique qui l'autorise à déverrouiller une serrure électronique particulière. Un terminal mobile peut aussi être invalidé en révoquant son certificat cryptographique. Lorsqu'une serrure électronique est déplacée d'un bâtiment vers un autre, il peut être nécessaire d'invalider tous les terminaux mobiles qui étaient autorisés à déverrouiller cette serrure électronique. Dans ce cas, chaque terminal mobile doit être invalidé individuellement ce qui est long et fastidieux à faire si le nombre de terminaux mobiles est important. Il est donc aussi souhaitable de disposer d'un procédé plus simple pour invalider l'ensemble des terminaux mobiles qui précédemment étaient autorisés à déverrouiller une serrure électronique particulière.

L'invention vise à proposer un procédé de contrôle d'accès qui satisfait au moins l'un des souhaits précédents. Elle a donc pour objet un procédé de contrôle d'accès à des bâtiments conforme à la revendication 1.

L'invention a également pour objet un système de contrôle d'accès à des bâtiments pour la mise en oeuvre de ce procédé de contrôle d'accès.

L'invention a également pour objet un premier terminal mobile pour la réalisation du système ci-dessus de contrôle d'accès à des bâtiments.

L'invention a également pour objet un ensemble d'une première et d'une seconde serrures électroniques pour la réalisation du système ci-dessus de contrôle d'accès à des bâtiments.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de contrôle d'accès à des bâtiments ;
- la figure 2 est une illustration schématique en coupe verticale d'une serrure électronique du système de contrôle d'accès de la figure 1 ;
- la figure 3 est une illustration schématique d'une table d'autorisation d'accès contenue dans la serrure électronique de la figure 2 ;
- la figure 4 est une illustration schématique d'une liste d'indices de terminaux mobiles contenue dans la serrure électronique de la figure 2 ;
- la figure 5 est une illustration schématique du contenu d'une mémoire d'un terminal mobile du système de contrôle d'accès de la figure 1 ;
- la figure 6 est une illustration schématique d'une table d'autorisation d'accès contenue dans la mémoire représentée sur la figure 5 ;
- la figure 7 est un organigramme d'un procédé de contrôle d'accès à des bâtiments mis en oeuvre dans le système de contrôle accès de la figure 1 ;
- la figure 8 est une illustration schématique de l'architecture d'une première trame d'informations transmise d'un terminal mobile vers une serrure électronique du système de la figure 1, et
- la figure 9 est une illustration schématique de l'architecture d'une seconde trame d'informations transmise d'un terminal mobile vers une serrure électronique du système de la figure 1.

Dans la suite de cette description, les caractéristiques et fonctions bien connues de l'homme du métier ne sont pas décrites en détail.

Dans cette description, des exemples détaillés de mode de réalisation sont d'abord décrits dans un chapitre I en référence aux figures. Ensuite, dans un chapitre II, des variantes de ces modes de réalisation sont présentées. Enfin, les avantages des différents modes de réalisation sont présentés dans un chapitre III.

### Chapitre I : Exemples de mode de réalisation détaillé

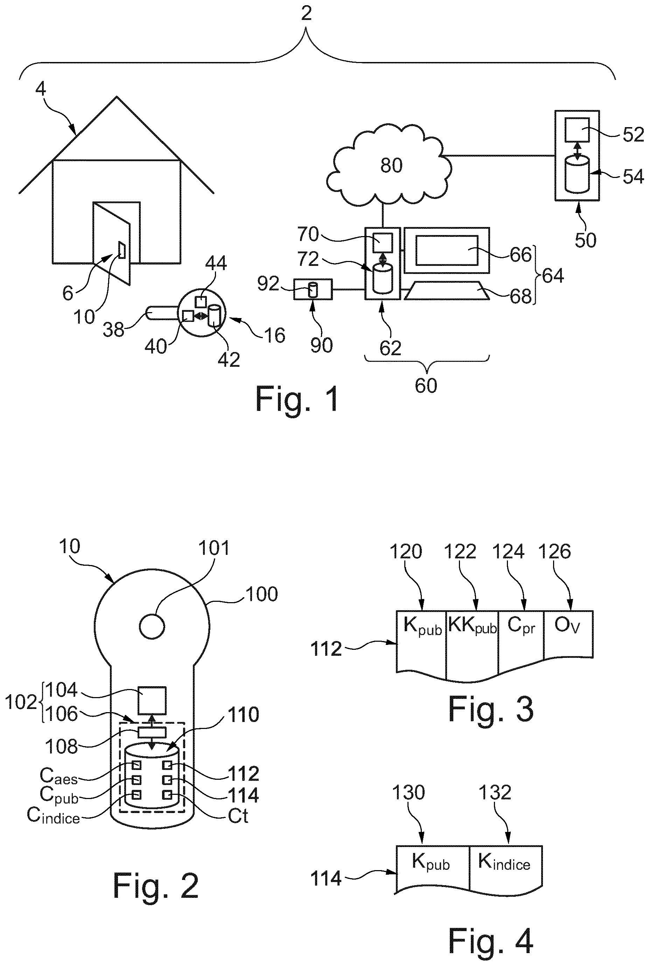

La figure 1 représente un système 2 de contrôle d'accès à des bâtiments équipés chacun d'au moins une porte d'accès. Pour simplifier la figure 1 seul un bâtiment 4 équipé d'une porte 6 d'accès est représenté. La porte 6 est équipée d'une serrure électronique 10.

La porte 6 est déplaçable entre une position ouverte et une position fermée. Dans la position fermée, elle interdit l'accès à l'intérieur du bâtiment 4. Dans la position ouverte, un visiteur ou un résident peut librement entrer à l'intérieur du bâtiment 4.

Pour contrôler les accès au bâtiment 4, le système 2 comporte en plus plusieurs terminaux mobiles d'ouverture. Seul un terminal mobile 16 est représenté sur la figure 1.

Typiquement, le système 2 comporte plusieurs portes d'accès chacune équipée d'une serrure électronique pour contrôler les accès à plusieurs bâtiments ou à différentes parties d'un même bâtiment. Les différentes serrures électroniques et les différents terminaux mobiles fonctionnent alors comme décrit, respectivement, pour la serrure 10 et le terminal 16. Ainsi, par la suite, ces autres serrures électriques et ces autres terminaux mobiles ne sont pas décrits en détails et n'ont pas été représentés sur la figure 1.

Ici, la serrure 10 et le terminal 16 sont, par exemple, structurellement identiques, respectivement, à la serrure et à la clé électronique décrites dans la demande EP3431684. Ainsi, par la suite, seules les caractéristiques de la serrure 10 et du terminal 16 nécessaires pour comprendre l'invention sont décrites.

La serrure 10 se déplace, de façon réversible, entre un état verrouillé et un état déverrouillé. Dans l'état verrouillé, elle maintient la porte 6 dans sa position fermée. Dans l'état déverrouillé, la porte 6 peut librement être déplacée de sa position fermée vers sa position ouverte. La serrure 10 se déplace de son état verrouillé vers son état déverrouillé lorsqu'un terminal mobile autorisé à déverrouiller cette serrure 10 est présenté devant cette serrure 10.

Dans ce mode de réalisation, la serrure 10 est dépourvue de source d'alimentation interne et n'est pas raccordée à un réseau public d'alimentation électrique. La serrure 10 est alimentée par le terminal 16 lorsque celui-ci est présenté devant la serrure 10. La serrure 10 est également dépourvue d'émetteur-récepteur susceptible de lui permettre d'établir directement une liaison longue distance de transmissions d'informations avec un dispositif distant, comme un serveur de droits d'accès ou un poste d'administration. La serrure 10 est uniquement apte à communiquer avec le terminal 16 et un programmeur, tel que le programmeur 90 décrit plus loin, par l'intermédiaire d'une liaison courte distance. Dans ce texte, une liaison courte distance est une liaison de transmission d'informations qui peut s'établir entre deux dispositifs uniquement s'ils sont à moins de 10 m l'un de l'autre et, de préférence, à moins de 50 cm ou 10 cm l'un de l'autre.

Le terminal 16 est facilement transportable, à la main, par un être humain. Ici, le terminal 16 est une clé électronique pourvue d'une lame 38. Le terminal 16 comporte un microprocesseur 40, une mémoire non-volatile 42 et une batterie 44. Bien que le terminal 16 est ici la forme d'une clé mécanique, dans ce texte, le terme "terminal" est utilisé pour éviter toutes confusions avec les clés cryptographiques décrites plus loin.

La lame 38 est destinée à être insérée à l'intérieur de la serrure 10. Ainsi, dans ce cas, présenter le terminal 16 devant la serrure 10 consiste à introduire la lame 38 à l'intérieur de la serrure 10. Lorsque la lame 38 est introduite à l'intérieur de la serrure 10, cela établit des liaisons filaires entre le terminal 16 et la serrure 10. C'est par l'intermédiaire de ces liaisons filaires que le terminal 16 alimente la serrure 10 et échange des trames d'informations avec la serrure 10. Un exemple possible de mécanisme pour établir ces liaisons filaires est décrit en détail dans la demande EP3431684.

Le système 2 comporte aussi un serveur 50 de droit d'accès et un poste 60 d'administration pour gérer les autorisations d'accès aux différents bâtiments du système 2. Le serveur 50 et le poste 60 sont raccordés l'un à l'autre par l'intermédiaire d'un réseau 80 grande distance de transmission d'informations. Le réseau 80 est, par exemple, un réseau à commutation de paquets tel que le réseau Internet. Ici, ni la serrure 10 ni le terminal 16 n'est directement raccordé au réseau 80.

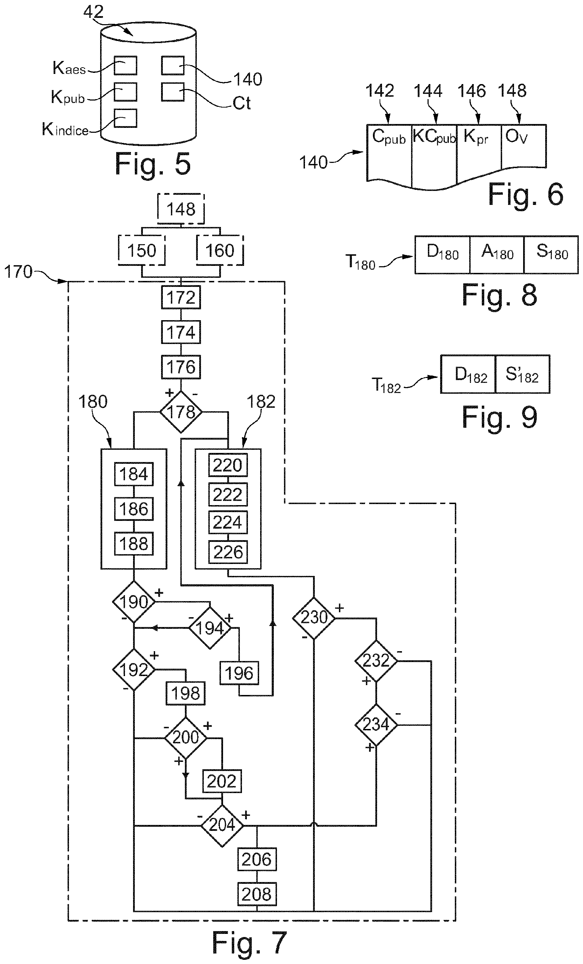

Le serveur 50 est capable de générer des autorisations d'accès à enregistrer dans la mémoire 42 et dans la serrure 10. Une autorisation d'accès contient l'ensemble des informations nécessaires à enregistrer dans un terminal mobile ou dans une serrure électronique pour que ce terminal puisse déverrouiller cette serrure électronique. Ainsi, en absence de cette autorisation d'accès, le terminal mobile ne peut pas déverrouiller la serrure électronique. A cet effet, le serveur 50 comporte un microprocesseur 52 et une mémoire 54. La mémoire 54 comporte les instructions et les données nécessaires pour mettre en oeuvre le procédé de la figure 7 lorsque ces instructions sont exécutées par le microprocesseur 52.

Le poste 60 d'administration permet à un utilisateur d'administrer les autorisations d'accès. A cet effet, il permet notamment, sous la commande de l'utilisateur, de déclencher la création, par le serveur 50, de nouvelles autorisations d'accès. Il permet aussi, toujours sous la commande de l'utilisateur, de commander le serveur 50 pour que celui génère des commandes d'invalidation d'autorisations d'accès précédemment générées. A cet effet, le poste 60 comporte, par exemple, une unité centrale 62 et une interface 64 homme-machine. A titre d'illustration, l'interface 64 comporte ici un écran 66 et un clavier 68.

L'unité centrale 62 comporte un microprocesseur 70 et une mémoire 72. La mémoire 72 comporte les instructions et les données nécessaires pour mettre en oeuvre le procédé de la figure 7 lorsque ces instructions sont exécutées par le microprocesseur 70.

Dans ce mode de réalisation, le poste 60 est en plus utilisé pour programmer les autorisations d'accès dans les terminaux mobiles. A cet effet, le poste 60 est raccordé à un programmateur 90 de terminaux mobiles, par exemple, par l'intermédiaire d'une liaison filaire ou d'une liaison sans fil. Le programmateur 90 est capable d'écrire dans la mémoire 42 du terminal 16. Par exemple, pour cela, il établit une liaison courte distance avec le terminal 16 lorsque celui-ci est situé à proximité. Par exemple, le programmateur 90 comporte un orifice qui permet d'introduire la lame 38 à l'intérieur du programmateur 90 pour établir des liaisons filaires avec le terminal mobile 16. Le programmateur 90 est utilisé pour écrire dans la mémoire 42 des autorisations d'accès qui ont été générées par le serveur 50 puis transmises au poste 60.

Dans ce mode de réalisation, le programmeur 90 permet aussi d'écrire dans une mémoire de la serrure 10. Par exemple, à cet effet, le programmeur 90 comporte une lame, identique à la lame 38, qui peut être introduite à l'intérieur de la serrure 10 pour établir les liaisons filaires entre ce programmeur 90 et cette serrure 10. Dans ce cas, de préférence, le programmeur 90 est un dispositif portable qui peut facilement être transporté à la main par un être-humain. De plus, le programmeur 90 comporte une mémoire tampon 92 dans laquelle les autorisations d'accès à enregistrer dans une serrure électronique sont temporairement stockées. Ainsi, les autorisations d'accès peuvent être transférées du poste 60 vers cette mémoire tampon 92. Ensuite, le programmeur 90 est déconnecté du poste 60 et transporté jusqu'à la serrure 10. Sa lame est alors introduite à l'intérieur de la serrure 10 puis les autorisations d'accès stockées dans sa mémoire tampon 92 sont transférées dans la mémoire de la serrure 10.

La figure 2 représente plus en détail l'architecture de la serrure 10. La serrure 10 comporte un cylindre 100 conforme au format européen. Ce cylindre 100 est représenté de profil sur la figure 2. Le cylindre 100 comporte un orifice 101 pour introduire la lame 38 à l'intérieur de la serrure 10.

Un mécanisme commandable 102 de déverrouillage de la serrure est logé à l'intérieur de ce cylindre 100. Ce mécanisme 102 est apte à déplacer la serrure 10 depuis son état verrouillé vers son état déverrouillé. Par exemple, le mécanisme 102 est similaire à celui décrits dans la demande FR3025236 ou la demande EP3431684. Pour accroître la lisibilité de la figure 2, la représentation du mécanisme 102 a été simplifiée.

Le mécanisme 102 comporte typiquement un actionneur électrique et/ou magnétique commandable 104 et une unité électronique 106 de commande de cet actionneur 104.

L'actionneur 104 est apte à déplacer la serrure 10 dans son état déverrouillé en réponse à une commande de déverrouillage transmise par l'unité 106. En absence de commande de déverrouillage, l'actionneur 104 maintient la serrure 10 dans son état verrouillé.

L'unité 106 est apte :
- à échanger des trames d'informations avec le terminal mobile introduit à l'intérieur de la serrure 10, et
- lorsque le terminal mobile introduit dans la serrure est autorisé à déverrouiller la serrure 10, à transmettre à l'actionneur 104 la commande de déverrouillage qui déclenche le déplacement de la serrure 10 dans son état déverrouillé.

A cet effet, l'unité 106 comporte un microprocesseur 108 et une mémoire 110. La mémoire 110 contient les instructions nécessaires pour mettre en oeuvre le procédé de la figure 7 lorsque ces instructions sont exécutées par le microprocesseur 108. La mémoire 110 contient aussi les données nécessaires pour la mise en oeuvre du procédé de la figure 7. En particulier, elle contient :
- une clé unique Caes de serrure,
- un identifiant Cpub de serrure,
- un indice Cindice de serrure,
- une constante Ct de dérivation de clés,
- une table 112 d'autorisation d'accès pour des terminaux mobiles autorisés à déverrouiller la serrure 10, et
- une liste 114 d'indices de terminaux.

La clé Caes est une clé de chiffrement unique dans le système 2. Autrement dit, aucune autre serrure électronique du système 2 ne contient la même clé Caes. La clé Caes est seulement connue de la serrure 10 et du serveur 50. Par exemple, ici, la clé Caes est enregistrée dans une zone non-réinscriptible de la mémoire 110. Cette zone non-réinscriptible est obtenue en rendant impossible l'écriture dans cette zone par des moyens logiciels et/ou par des moyens matériels. Ainsi, cette clé Caes ne peut pas être modifiée ou effacée.

L'identifiant Cpub est un identifiant qui permet d'identifier la serrure 10 parmi l'ensemble des serrures électroniques du système 2. L'identifiant Cpub est lui aussi enregistré dans la zone non-réinscriptible de la mémoire 110.

L'indice Cindice est un indice qui a été programmé dans la serrure 10, par exemple, lors de sa mise en service. L'indice Cindice est enregistré dans une zone ré-inscriptible de la mémoire 110 de sorte qu'il peut être modifié ultérieurement après la première mise en service de la serrure 10.

La constante Ct est une constante dont la valeur est la même dans toutes les serrures électroniques du système 2.

La figure 3 représente plus en détail la table 112 d'autorisation d'accès. La table 112 comporte quatre colonnes 120, 122, 124 et 126 et de zéro à plusieurs lignes. Pour chaque ligne de la table 112, la colonne 120 contient un identifiant Kpub d'un terminal, la colonne 122 contient un cryptogramme KKpub, la colonne 124 contient un indice Cpr de priorité et la colonne 126 contient un code d'accès Ov. Les données situées sur une même ligne de cette table sont toutes associées à l'identifiant Kpub contenu dans la colonne 120 de cette ligne.

La figure 4 représente plus en détail la liste 114. La liste 114 comporte deux colonnes 130 et 132 et des lignes. Chaque ligne contient dans la colonne 130 un identifiant Kpub d'un terminal et, dans la colonne 132, un indice Kindice associé à cet identifiant Kpub.

Les différentes données contenues dans la table 112 et dans la liste 114 et leur utilisation sont décrites plus loin. La table 112 et la liste 114 sont enregistrées dans la zone ré-inscriptible de la mémoire 110.

La figure 5 représente plus en détail la mémoire 42 du terminal 16. La mémoire 42 contient :
- une clé unique Kaes de terminal,
- un identifiant Kpub de terminal,
- un indice Kindice de terminal,
- une constante Ct de dérivation de clés, et
- une table 140 d'autorisation d'accès pour des serrures électroniques que ce terminal est autorisé à déverrouiller.

La clé Kaes est une clé de chiffrement unique dans le système 2. Autrement dit, aucun autre terminal mobile du système 2 ne contient la même clé Kaes. La clé Kaes est seulement connue du terminal 16 et du serveur 50. Par exemple, ici, la clé Kaes est enregistrée dans une zone non-réinscriptible de la mémoire 42. Ainsi, cette clé Kaes ne peut pas être modifiée ou effacée.

L'identifiant Kpub est un identifiant qui permet d'identifier le terminal 16 parmi l'ensemble des terminaux mobiles du système 2. L'identifiant Kpub est enregistré dans la mémoire 42. Par exemple, l'identifiant Kpub est enregistré dans une zone de la mémoire 42 qui peut être écrite lorsque le terminal 16 est programmé pour la première fois.

L'indice Kindice est un indice qui a été programmé dans le terminal 16, par exemple, lors de sa mise en service ou lors d'une mise à jour de ses autorisations d'accès. L'indice Kindice est enregistré dans une zone de la mémoire 42 qui peut être modifiée ultérieurement après la première mise en service du terminal 16.

La constante Ct enregistrée dans la mémoire 42 est la même dans tous les terminaux mobiles du système 2. Elle est égale à la constante Ct enregistrée dans toutes les serrures électroniques du système 2.

La figure 6 représente plus en détail la table 140 d'autorisation d'accès. La table 140 comporte quatre colonnes 142, 144, 146 et 148 et de zéro à plusieurs lignes. Pour chaque ligne de la table 140, la colonne 142 contient un identifiant Cpub de serrure, la colonne 144 contient un cryptogramme KCpub, la colonne 146 contient un indice Kpr de priorité et la colonne 148 contient un code d'accès Ov. Le code Ov peut prendre une première valeur et, en alternance, une seconde valeur différente. La première valeur indique que le terminal 16 est autorisé à déverrouiller la serrure 10. Les autres valeurs de ce code Ov indique que le terminal 16 n'est pas autorisé à déverrouiller la serrure 10. Les données situées sur une même ligne de cette table 140 sont toutes associées à l'identifiant Cpub contenu dans la colonne 142 de cette ligne.

Le fonctionnement du système 2 va maintenant être décrit en référence au procédé de la figure 7.

Initialement, lors d'une phase 148, le système 2 est installé. Cette phase 148 consiste notamment à fournir les différentes serrures électroniques qui sont utilisées dans le système 2 et à les installer sur des portes respectives. Lors de la phase 148, les terminaux mobiles qui sont utilisés dans le système 2 sont également fournis.

Ensuite, lors d'une phase 150, des autorisations d'accès sont programmées dans un ou plusieurs terminaux mobiles du système 2. Ici, cette phase 150 est décrite dans le cas particulier du terminal 16. Toutefois, ce qui est décrit dans ce cas particulier s'applique à tous terminaux mobiles du système 2.

Lors de la phase 150, par exemple, un administrateur, à l'aide du poste 60, identifie les serrures électroniques du système 2 que le terminal 16 peut déverrouiller. Ensuite, il déclenche la génération par le serveur 50 des autorisations d'accès à enregistrer dans la table 140 du terminal 16 pour chacune des serrures électroniques identifiées. La génération de ces autorisations d'accès est ici illustrée dans le cas particulier où le terminal 16 doit être autorisé à déverrouiller la serrure 10. Pour cela, le serveur 50 construit le cryptogramme KCpub en chiffrant les données suivantes à l'aide de la clé Caes de la serrure 10 :
- l'identifiant Kpub du terminal 16,
- l'indice Kindice du terminal 16,
- l'identifiant Cpub de la serrure 10, et
- l'indice Cindice de la serrure 10.

Autrement dit, le cryptogramme KCpub est construit à l'aide de la relation suivante : KCpub = CBC_MAC(Caes; Kpub; Kindice; Cpub; Cindice), où CBC_MAC() est une fonction de construction prédéterminée paramétrée par une clé de chiffrement et des données en clair. Le terme "données en clair" désigne des données qui sont directement utilisables sans nécessiter au préalable un déchiffrement. Par la suite, dans la liste des arguments de la fonction CBC_MAC(), la clé de chiffrement utilisée est placée en première position avant les données à chiffrer. Ici, cette fonction CBC_MAC() met seulement en oeuvre un algorithme de chiffrement symétrique. Aucun algorithme de chiffrement asymétrique n'est utilisé. Par exemple, dans ce mode de réalisation, la fonction CBC_MAC() est une fonction de chiffrement symétrique tel que la fonction de chiffrement symétrique connue sous l'acronyme AES ("Advanced Encryption Standard").

Dans le cas de la construction du cryptogramme KCpub, la clé de chiffrement est la clé Caes et les données en clair sont les données Kpub, Kindice, Cpub, et Cindice. Le cryptogramme KCpub construit est donc spécifique au terminal 16 puisqu'il dépend de son identifiant Kpub et également spécifique à la serrure 10 puisqu'il dépend de la clé Caes et de l'identifiant Cpub. Le cryptogramme KCpub constitue donc une autorisation d'accès pour un terminal mobile particulier à une serrure électronique particulière. Dès lors, le serveur 50 construit un cryptogramme KCpub pour chaque serrure électronique qui doit être déverrouillée par le terminal 16.

A chaque fois qu'un nouveau cryptogramme KCpub est construit pour le même terminal mobile et pour la même serrure électronique, l'indice Kpr associé à ce terminal mobile et à cette serrure électronique est incrémenté, par exemple, de 1 par rapport à sa précédente valeur.

De plus, si le terminal 16 est programmé pour remplacer un précédent exemplaire d'un terminal 16 qui, par exemple, a été perdu :
- un identifiant Kpub identique à celui du terminal 16 perdu est enregistré dans sa mémoire 42 de sorte que les identifiants Kpub du terminal 16 programmé et du terminal 16 perdu sont identiques, et
- l'indice Kindice du terminal 16 programmé est incrémenté d'un pas prédéterminé, par exemple égal à 1, par rapport à l'indice Kindice du terminal 16 perdu.

Enfin, l'identifiant Cpub de la serrure 10, le cryptogramme KCpub construit par le serveur 50 pour la serrure 10, l'indice Kpr incrémenté et, éventuellement, l'indice Kindice incrémenté sont transmis au poste 60.

Lorsque le terminal 16 est raccordé au programmeur 90, le poste 60 transmet à son tour ces données au programmeur 90 qui les transmet au terminal 16. Le terminal 16 les enregistre dans une ligne de sa table 140. Si la table 140 contient déjà une ligne pour l'identifiant Cpub, les nouvelles données viennent remplacer les anciennes données contenues dans cette ligne dans les colonnes 144, 146 et 148. Dans le cas contraire, une nouvelle ligne est créée dans la table 140 pour y enregistrer les données reçues associée à l'identifiant Cpub. Si un indice Kindice incrémenté est aussi transmis au terminal 16, celui-ci remplace le précédent indice Kindice enregistré dans la mémoire 42.

Le terminal 16 ne comporte pas la clé Caes. Ainsi, les informations contenues dans la mémoire 42 sont insuffisantes à elles seules pour construire d'autres cryptogrammes KCpub susceptibles d'autoriser ce terminal 16 à déverrouiller d'autres serrures électroniques du système 2. Dès lors, même si les informations contenues dans la mémoire 42 sont compromises, cela ne remet pas en question la sécurité du système 2. En effet, il n'est pas possible de construire à partir de ces informations des autorisations d'accès pour déverrouiller d'autres serrures électroniques. De plus, le fait de simplement copier les informations contenues dans la table 140 du terminal 16 dans la mémoire 42 d'un autre terminal ne permet pas de simplement construire un double du terminal 16. En effet, l'identifiant Kpub de cet autre terminal est alors différent de l'identifiant Kpub du terminal 16, ce qui empêche de déverrouiller une serrure électronique en utilisant pour cela un cryptogramme KCpub spécifiquement construit pour le terminal 16.

La phase 150 peut être exécutée à tout moment et pas seulement au moment de la mise en service d'un nouveau terminal mobile.

En parallèle, une phase 160 de configuration d'autorisation d'accès dans une serrure électronique peut être exécutée. Cette phase 160 est par exemple exécutée s'il est plus simple de configurer une serrure électronique plutôt que de configurer chacun des terminaux mobiles qui doivent être autorisés à déverrouiller cette serrure électronique.

Ici, cette phase 160 est décrite dans le cas particulier où la serrure 10 doit être configurée pour être déplacée dans son état déverrouillé par le terminal 16.

Pour cela, l'utilisateur, à l'aide du poste 60, identifie le ou les terminaux mobiles du système 2 qui sont autorisés à déverrouiller la serrure 10. Ensuite, il déclenche la génération par le serveur 50 des autorisations d'accès nécessaires à enregistrer dans la table 112 de la serrure 10.

A cet effet, le serveur 50 construit un cryptogramme KKpub en chiffrant les données suivantes à l'aide de la clé Kaes du terminal 16 :
- l'identifiant Kpub du terminal 16,
- l'indice Kindice du terminal 16,
- l'identifiant Cpub de la serrure 10, et
- l'indice Cindice de la serrure 10.

Autrement dit, le cryptogramme KKpub est construit à l'aide de la relation suivante : KKpub = CBC_MAC(Kaes; Kpub; Kindice; Cpub; Cindice), où CBC_MAC() est la même fonction que celle utilisée pour construire le cryptogramme KCpub.

Le cryptogramme KKpub ainsi construit est lui aussi spécifique au terminal 16 puisqu'il dépend de l'identifiant Kpub et de la clé Kaes et également spécifique à la serrure 10 puisqu'il dépend de l'identifiant Cpub. Le cryptogramme KKpub constitue donc une autorisation d'accès pour un terminal particulier à une serrure électronique particulière. Le serveur 50 construit donc un cryptogramme KKpub pour chaque terminal mobile qui doit être autorisé à déverrouiller la serrure 10.

A chaque fois qu'un nouveau cryptogramme KKpub est construit pour un terminal mobile particulier et pour la serrure 10, la précédente valeur de l'indice Cpr associé à ce terminal mobile et à cette serrure 10 est incrémenté du même pas que celui utilisé pour incrémenter l'indice Kpr.

L'identifiant Kpub du terminal 16, le cryptogramme KKpub construit et l'indice Cpr incrémenté sont transmis au poste 60 puis enregistrés dans la mémoire tampon 92 du programmeur 90. Le programmeur 90 est alors déconnecté du poste 60 et transporté jusqu'à la serrure 10. Sa lame est alors introduite dans la serrure 10 et les données stockées dans sa mémoire tampon 92 sont enregistrées dans la table 112 de la serrure 10. De façon similaire à ce qui a déjà été décrit pour l'enregistrement de données dans la table 140 :
- si l'identifiant Cpub est déjà contenu dans la table 112, les données transférées sont utilisées pour mettre à jour le contenu des colonnes 122, 124 et 126 déjà associées à cet identifiant Cpub, et
- sinon, une nouvelle lignée est créée dans la table 112 et les données transférées y sont enregistrées.

La clé Kaes n'est pas contenue dans la serrure 10. Ainsi, les informations contenues dans la serrure 10 ne permettent pas à elles seules de construire un cryptogramme KKpub. Dès lors, si les données contenues dans une serrure électronique sont compromises, cela ne permet pas la construction de nouvelles autorisations d'accès pour autoriser d'autres terminaux mobiles à déverrouiller la serrure 10.

Alternativement, l'identifiant Kpub du terminal 16, le cryptogramme KKpub construit et l'indice Cpr incrémenté sont transmis du poste 60 vers le programmeur 90, puis du programmeur 90 vers un autre terminal mobile que le terminal 16. Cet autre terminal mobile enregistre ces autorisations d'accès pour le terminal 16 dans sa mémoire 42. Ensuite, lorsque cet autre terminal mobile est introduit dans la serrure 10, il transmet à la serrure 10 les autorisations d'accès pour le terminal 16 et, en réponse, la serrure 10 les enregistre dans sa table 112 comme précédemment décrit. Ainsi, dans ce dernier cas, ce n'est pas le programmeur 90 qui est utilisé pour transporter les autorisations d'accès du terminal 16 jusqu'à la serrure 10 mais un autre terminal mobile du système 2.

Lors de la phase 160, il est possible de générer une commande d'invalidation générique de tous les terminaux mobiles précédemment autorisés à déverrouiller la serrure 10. Cette commande d'invalidation générique est transmise à la serrure 10 selon les mêmes chemins possibles que ceux décrits ci-dessus pour la transmission des autorisations d'accès à la serrure 10. Lorsque cette commande d'invalidation générique est reçue par la serrure 10, en réponse, la serrure 10 incrémente d'un pas prédéterminé son indice Cindice contenu dans sa mémoire 110. En parallèle, les autorisations d'accès enregistrées dans les terminaux mobiles pour déverrouiller la serrure 10 ne sont pas modifiées. Comme expliqué plus loin, l'incrémentation de l'indice Cindice dans la serrure 10 provoque alors l'invalidation de tous les terminaux mobiles précédemment programmés pour déverrouiller cette serrure 10.

La phase 160 peut être exécutée à tout moment et pas seulement au moment de la mise en service d'une serrure électronique.

Après avoir exécuté au moins l'une des phases 150 et 160, une phase 170 de contrôle d'accès est exécutée. Ici, la phase 170 est décrite dans le cas particulier où, au préalable :
- la phase 150 a été exécutée pour autoriser le terminal 16 à déverrouiller la serrure 10, et
- la phase 160 a été exécutée pour autoriser le terminal 16 à déverrouiller la serrure 10.
Ainsi, le terminal 16 comporte des autorisations d'accès pour déverrouiller la serrure 10 et la serrure 10 comporte aussi des autorisations d'accès pour être déverrouillée par le terminal 16.

Lorsqu'un résident souhaite ouvrir la porte 6, lors d'une étape 172, il introduit la lame 38 du terminal 16 à l'intérieur de l'orifice 101 de la serrure 10. Les liaisons filaires entre le terminal 16 et la serrure 10 sont alors établies et le terminal 16 alimente la serrure 10 et son microprocesseur 108. En réponse à l'alimentation de la serrure 10, lors d'une étape 174, le microprocesseur 108 génère une valeur, appelée par la suite « nonce », qui varie à chaque fois que l'étape 174 est exécutée. Par exemple, cette valeur est générée par tirage aléatoire ou pseudo-aléatoire.

Ensuite, lors d'une étape 176, le microprocesseur 108 transmet une trame d'informations, appelée ici trame Tᵢₙᵢ, au terminal 16 par l'intermédiaire des liaisons filaires établies.

La trame Tᵢₙᵢ comporte notamment les données suivantes en clair :
- l'identifiant Cpub et l'indice Cindice enregistrés dans la mémoire 110 de la serrure 10, et
- le nonce généré lors de l'étape 174.

En réponse à la réception de la trame Tᵢₙᵢ, lors d'une étape 178, le microprocesseur 40 du terminal 16 recherche dans la table 140 enregistrée dans sa mémoire 42 si celle-ci comporte un cryptogramme KCpub associé à l'identifiant Cpub contenu dans la trame Tᵢₙᵢ reçue.

Dans l'affirmative, le microprocesseur 40 procède à une étape 180 de construction et de transmission d'une trame T₁₈₀ (figure 8). Dans la négative, le microprocesseur 40 procède à une étape 182 de construction et de transmission d'une trame T₁₈₂ (figure 9).

La trame T₁₈₀ comporte des données D₁₈₀ en clair, éventuellement des autorisations d'accès A₁₈₀ pour d'autres terminaux mobiles et une signature numérique S₁₈₀.

Les données D₁₈₀ comportent :
- l'identifiant Kpub et l'indice Kindice contenus dans la mémoire 42 du terminal 16,
- l'indice Kpr et le code d'accès Ov associés à l'identifiant Cpub trouvé dans la table 140.

Les autorisations A₁₈₀ correspondent à des autorisations d'accès destinées à être enregistrées dans la table 112 de la serrure 10 pour autoriser d'autres terminaux mobiles que le terminal 16 à déverrouiller cette serrure 10. Ces autorisations d'accès A₁₈₀ sont enregistrées dans le terminal 16 lors de la phase 160 comme décrit précédemment. Si le terminal 16 ne comporte aucune autorisation d'accès A₁₈₀ destinée à la serrure 10, la trame T₁₈₀ est alors dépourvue de telles autorisations d'accès A₁₈₀. Ainsi, par la suite, toutes les opérations de traitement des autorisations d'accès A₁₈₀ sont réalisées uniquement si le terminal 16 comporte des autorisations d'accès à enregistrer dans la table 112 de la serrure 10. Dans le cas contraire, les traitements des autorisations A₁₈₀ sont omis.

La signature S₁₈₀ permet de vérifier l'intégrité et l'authenticité, notamment des données D₁₈₀ et des autorisations d'accès A₁₈₀ contenues dans la trame T₁₈₀. Ici, « vérifier l'intégrité » signifie vérifier que les données et les autorisations d'accès contenues dans une trame n'ont pas été modifiées depuis l'émission de cette trame par un terminal mobile. « Vérifier l'authenticité » signifie vérifier qu'une trame a bien été générée et transmise par le terminal mobile qui prétend avoir transmis cette trame d'informations. La signature S₁₈₀ est construite à partir des données D₁₈₀, des autorisations A₁₈₀ et du nonce échangé lors de l'étape 176.

La trame T₁₈₂ (figure 9) comporte elle aussi des données D₁₈₂ en clair et une signature numérique S'₁₈₂. Les données D₁₈₂ comportent ici notamment l'identifiant Kpub du terminal mobile qui émet la trame T₁₈₂.

La signature S'₁₈₂ est construite à partir de l'identifiant Kpub contenu dans la mémoire 42 du terminal mobile et du nonce échangé lors de l'étape 176.

L'étape 180 débute par une opération 184 de dérivation d'une clé KCpub1 à partir du cryptogramme KCpub trouvé dans la table 140. Pour cela, le microprocesseur 108 exécute une fonction prédéterminée AES_CBC() de dérivation de clé. Par exemple, dans ce mode de relation, la fonction à AES_CBC() met seulement en oeuvre un algorithme de chiffrement symétrique tel que l'algorithme connu sous l'acronyme à AES (« Advanced Encryption System »). Par exemple, ici, la clé KCpub1 est le résultat du chiffrement de la constante Ct préenregistrée dans la mémoire 42 en mettant en oeuvre la fonction AES_CBC() et en utilisant le cryptogramme KCpub comme clé de chiffrement. Ainsi, la clé KCpub1 est obtenue à l'aide de la relation suivante : KCpub1 = AES_CBC(KCpub ; Ct).

La fonction AES_CBC() exécutée est toujours la même à chaque exécution de l'opération 184. Ainsi, la clé KCpub1 dérivée du cryptogramme KCpub est toujours la même lors de chaque exécution de la phase 170 entre le terminal 16 et la serrure 10 tant que le cryptogramme KCpub trouvé dans la table 140 est le même.

Ensuite, lors d'une opération 186, le microprocesseur 40 génère la trame T₁₈₀. Pour cela, le microprocesseur 40 construit la signature S₁₈₀ en utilisant les données D₁₈₀, les autorisations d'accès A₁₈₀ à transmettre à la serrure 10 et le nonce échangé lors de l'étape 176. Pour obtenir cette signature, une fonction de construction prédéterminée paramétrée par la clé KCpub1 est mise en oeuvre. Cette fonction prédéterminée fait intervenir des opérations de chiffrement symétrique et aucune opération de chiffrement asymétrique. Ici, cette fonction de construction est la même fonction CBC_MAC() que celle utilisée pour construire les cryptogrammes KCpub et KKpub. Ainsi, ici, la signature S₁₈₀ est obtenue à l'aide de la relation suivante : S₁₈₀ = CBC_MAC(KCpub1 ; Kpub ; Kindice ; Kpr ; Ov ; A₁₈₀; nonce) où :
- KCpub1 est la clé de chiffrement dérivée lors de l'opération 184,
- Kpub, Kindice, Kpr, Ov sont les données D₁₈₀ associées dans la table 140 à l'indice Cpub trouvé,
- le nonce est celui échangé lors de l'étape 176.

Ensuite, la signature S₁₈₀ ainsi obtenue est concaténée aux données D₁₈₀ en clair et aux autorisations d'accès A₁₈₀ pour former la trame T₁₈₀. Dans ce mode de réalisation, la signature S₁₈₀ joue également le rôle de première information, fonction du cryptogramme KCpub, qui permet de vérifier qu'un cryptogramme KCpub' construit par la serrure est identique au cryptogramme KCpub contenu dans la mémoire 42 du terminal 16.

Lors d'une opération 188, la trame T₁₈₀ ainsi générée est transmise à la serrure 10 par l'intermédiaire des liaisons filaires établies. L'étape 180 est alors terminée.

En réponse à la réception de la trame T₁₈₀, lors d'une étape 190, le microprocesseur 108 de la serrure 10 recherche dans sa table 112 si celle-ci comporte une ligne associée à l'identifiant Kpub contenu dans les données D₁₈₀ de la trame T₁₈₀.

Dans la négative, le microprocesseur 108 procède directement à une étape 192 de vérification de l'intégrité et de l'authenticité de la trame T₁₈₀ reçue.

Dans le cas contraire, lors d'une étape 194, le microprocesseur 108 compare l'indice Kpr contenu dans les données D₁₈₀ reçues à l'indice Cpr associé par la table 112 à l'identifiant Kpub reçu.

Si l'indice Kpr reçu est supérieur ou égal à l'indice Cpr, le procédé se poursuit directement par l'étape 192. A l'inverse, si l'indice Kpr reçu est strictement inférieur à l'indice Cpr enregistré dans la table 112, lors d'une étape 196, le microprocesseur 108 transmet une trame T₁₉₆ au terminal 16. En réponse à la réception de cette trame T₁₉₆, le microprocesseur 40 du terminal 16 exécute l'étape 182 pour construire et transmettre la trame T₁₈₂.

Lors de l'étape 192, le microprocesseur 108 vérifie que l'autorisation d'accès enregistrée dans la table 140 pour la serrure 10 est une autorisation d'accès valide. Ici, pour cela, il vérifie l'intégrité et l'authenticité de la trame T₁₈₀ reçue.

Plus précisément, le microprocesseur 108 commence par construire un cryptogramme KCpub' à l'aide de la relation suivante : KCpub' = CBC_MAC(Caes ; Kpub ; Kindice ; Cpub ; Cindice), où :
- CBC_MAC() est la même fonction de construction que celle mise en oeuvre par le serveur 50 lors de la phase 150 pour construire le cryptogramme KCpub,
- Caes est la clé unique de chiffrement enregistrée dans la mémoire 110 de la serrure 10,
- Kpub et Kindice sont respectivement l'identifiant de terminal et l'indice de terminal contenus dans la trame T₁₈₀ reçue,
- Cpub et Cindice sont, respectivement, l'identifiant de serrure et l'indice de serrure contenus dans la mémoire 110 de la serrure 10.

Ensuite, le microprocesseur 108 vérifie que le cryptogramme KCpub' construit est identique au cryptogramme KCpub utilisé pour construire la signature S₁₈₀ reçue. Pour cela, ici, le microprocesseur 108 dérive une clé KCpub1' à partir du cryptogramme KCpub'. La clé KCpub1' est calculée à l'aide de la relation suivante : KCpub1' = AES_CBC(KCpub' ; Ct), où :
- AES_CBC() est la même fonction de dérivation de clé que celle mise en oeuvre lors de l'opération 184,
- KCpub' est le cryptogramme qui vient d'être construit par le microprocesseur 108, et
- Ct est la constante enregistrée dans la mémoire 110.

Ensuite, le microprocesseur 108 construit une signature S'₁₈₀ calculée à l'aide de la relation suivante : S'₁₈₀ = CBC_MAC(KCpub1' ; Kpub ; Kindice ; Kpr ; Ov ; A₁₈₀ ; nonce), où :
- CBC_MAC() est la même fonction de construction que celle mise en oeuvre lors de l'opération 186,
- KCpub1' est la clé précédemment dérivée du cryptogramme KCpub',
- Kpub, Kindice, Kpr et Ov proviennent des données D₁₈₀ contenues dans la trame T₁₈₀ reçue,
- A₁₈₀ sont les autorisations d'accès contenues dans la trame T₁₈₀ si celle-ci en contient, et
- "nonce" est le nonce transmis par la serrure 10 au terminal 16 lors de l'étape 176.

Enfin, le microprocesseur 108 compare la signature S'₁₈₀ obtenue à la signature S₁₈₀ contenue dans la trame T₁₈₀ reçue. Si ces deux signatures S'₁₈₀ et S₁₈₀ sont égales, cela signifie que les cryptogrammes KCpub et KCpub' sont égaux et donc que les identifiants Kpub, Cpub, Kindice et Cindice utilisés pour les construire sont identiques. De plus, dans ce cas, l'intégrité et l'authenticité de la trame T₁₈₀ est confirmée. Lorsque l'intégrité et l'authenticité de la trame T₁₈₀ est confirmée, le procédé se poursuit par une étape 198 lors de laquelle les autorisations d'accès A₁₈₀ sont enregistrées dans la table 112. Si la trame T₁₈₀ ne comporte aucune autorisation d'accès A₁₈₀, l'étape 198 est omise.

Ensuite, lors d'une étape 200, le microprocesseur 108 compare l'indice Kindice contenu dans la trame T₁₈₀ à l'indice Kindice enregistré dans la liste 114 et associé à l'identifiant Kpub contenu dans la trame T₁₈₀.

Si l'indice Kindice contenu dans la trame T₁₈₀ est supérieur à l'indice Kindice contenu dans la liste 114, lors d'une étape 202, le microprocesseur 108 remplace l'indice Kindice associé à l'identifiant Kpub dans la liste 114 par l'indice Kindice contenu dans la trame T₁₈₀.

S'il n'existe aucun indice Kindice associé à l'identifiant Kpub reçu dans la table 114, le microprocesseur 108 ajoute, lors de l'étape 202, une ligne dans la table 114. La ligne ajoutée contient l'identifiant Kpub reçu dans la colonne 130 et l'indice Kindice reçu dans la colonne 132.

Après l'étape 202, le microprocesseur 108 procède à une étape 204 lors de laquelle il teste la valeur du code Ov contenu dans la trame T₁₈₀.

Si la valeur du code Ov reçue est égale à la première valeur, alors, lors d'une étape 206, le microprocesseur 108 génère la commande de déverrouillage et la transmet à l'actionneur 104.

En réponse, lors d'une étape 208, l'actionneur 104 déplace la serrure 10 dans son état déverrouillé et la porte 6 peut être ouverte.

Si l'indice Kindice reçu est égal à l'indice Kindice associé à l'identifiant Kpub reçu dans la table 114, alors le procédé se poursuit directement à l'étape 204 sans exécuter l'étape 202.

Si lors de l'étape 192, l'intégrité et l'authenticité de la trame T₁₈₀ n'est pas confirmée ou si l'indice Kindice reçu est inférieur à l'indice Kindice contenu dans la table 114 ou si lors de l'étape 204, le microprocesseur 108 détermine que la valeur du code Ov est différente de la première valeur, alors l'exécution des étapes 206 et 208 est inhibée et la serrure 10 reste dans son état verrouillé.

Il est souligné que l'intégrité et l'authenticité de la trame T₁₈₀ ne peut être confirmée que si le cryptogramme KCpub utilisé par le terminal 16 pour construire la signature S₁₈₀ est bien celui correspondant à ce terminal 16 et à la serrure 10. En effet, ce cryptogramme KCpub dépend de l'identifiant Kpub et de la clé unique Caes. Ainsi, il ne peut pas être utilisé par un autre terminal mobile que le terminal 16 pour déverrouiller une serrure électronique. Il ne peut pas non plus être utilisé pour déverrouiller une autre serrure électronique que la serrure 10.

L'intégrité et l'authenticité de la trame T₁₈₀ est confirmée uniquement si l'indice Cindice utilisé pour construire le cryptogramme KCpub est égal à l'indice Cindice enregistré dans la serrure 10. Ainsi, le fait d'incrémenter l'indice Cindice contenu dans la mémoire 110 de la serrure 10, par exemple à l'aide du programmateur 90, permet en une seule opération d'invalider tous les terminaux mobiles qui précédemment étaient autorisés à déverrouiller cette serrure.

Pour autoriser un nouveau terminal mobile à déverrouiller la serrure 10, il suffit de programmer ce nouveau terminal mobile comme décrit lors de la phase 150. Il n'est pas nécessaire pour cela de programmer aussi la serrure 10.

Dans ce mode de relation, aucun algorithme de chiffrement asymétrique n'est mis en oeuvre pour vérifier l'intégrité et l'authenticité de la trame T₁₈₀. Cela limite la consommation d'énergie nécessaire pour faire cela.

L'étape 182 débute par une opération 220 de construction d'un cryptogramme KKpub' par le microprocesseur 42 du terminal 16. Ce cryptogramme KKpub' est construit en mettant en oeuvre la relation suivante : KKpub' = CBC_MAC(Kaes ; Kpub ; Kindice ; Cpub ; Cindice), où :
- Kaes, Kpub et Kindice sont, respectivement, la clé unique Kaes, l'identifiant Kpub et l'indice Kindice enregistrés dans la mémoire 42 du terminal 16, et
- Cpub et Cindice sont, respectivement, l'identifiant de serrure et l'indice de serrure contenus dans la trame Tᵢₙᵢ.

Ensuite, lors d'une opération 222, le microprocesseur 40 dérive une clé KKpub1' à partir du cryptogramme KKpub' construit lors de l'opération 220. Pour cela, une fonction prédéterminée de dérivation de clé est exécutée. Ici, la clé KKpub1' est obtenue à l'aide de la relation suivante : KKpub1' = AES_CBC(KKpub' ; Ct), où :
- AES_CBC() est la même fonction de dérivation que celle utilisée lors de la phase 160, et
- Ct est la constante enregistrée dans la mémoire 42.

Lors d'une opération 224, le microprocesseur 40 génère la trame T₁₈₂. Pour cela, le microprocesseur 40 construit la signature S'₁₈₂ à partir des données D₁₈₂, du nonce échangé lors de l'étape 176 et en mettant en oeuvre la fonction CBC_MAC() paramétrée par la clé KKpub1'. La signature S'₁₈₂ est donc construite en mettant en oeuvre la relation suivante : S'₁₈₂ = CBC_MAC(KKpub1' ; Kpub ; nonce).

Ensuite, la signature S'₁₈₂ construite est concaténée aux données D₁₈₂ pour former la trame T₁₈₂.

Lors d'une opération 226, la trame T₁₈₂ construite est transmise à la serrure 10 par l'intermédiaire des liaisons filaires établies. Ainsi, la signature S'₁₈₂ joue également le rôle de seconde information, fonction du cryptogramme KKpub', qui permet de vérifier que le cryptogramme KKpub' construit par le terminal est identique au cryptogramme KKpub contenu dans la mémoire 110 de la serrure.

En réponse à la réception de la trame T₁₈₂, lors d'une étape 230, le microprocesseur 108 recherche dans la table 112 si celle-ci comporte une ligne associée à l'identifiant Kpub contenu dans les données D₁₈₂ de la trame T₁₈₂. Dans la négative, l'exécution des étapes 206 et 208 est inhibée et la serrure 10 reste dans son état verrouillé.

Si une ligne de la table 112 contient le même identifiant Kpub que celui reçu, le microprocesseur 108 procède à une étape 232 de vérification de l'intégrité et de l'authenticité de la trame T₁₈₂ reçue.

Lors de l'étape 232, le microprocesseur 108 sélectionne dans la table 112 le cryptogramme KKpub associé à l'identifiant Kpub reçu. Ensuite, le microprocesseur 108 dérive une clé KKpub1 à partir du cryptogramme KKpub sélectionné. Pour cela, la relation suivante est mise en oeuvre : KKpub1 = AES_CBC(KKpub ; Ct), où :
- AES_CBC() est la même fonction de dérivation de clé que celle mise en oeuvre lors de l'opération 222,
- KKpub est le cryptogramme associé à l'identifiant Kpub reçu dans la table 112,
- Ct est la constante enregistrée dans sa mémoire 110.

Le microprocesseur 108 construit alors une signature S₁₈₂ en mettant en œuvre la relation suivante : S₁₈₂ = CBC_MAC(KKpub1 ; Kpub ; nonce), où :
- CBC_MAC() est la même fonction de construction que celle mise en oeuvre lors de l'opération 224,
- Kpub est l'identifiant Kpub contenu dans la trame T₁₈₂, et
- "nonce" est le nonce échangé lors de l'étape 176.

Enfin, le microprocesseur 108 compare la signature S₁₈₂ obtenue à la signature S'₁₈₂ contenue dans la trame T₁₈₂ reçue. Si les deux signatures S₁₈₂ et S'₁₈₂ sont égales, l'intégrité et l'authenticité de la trame T₁₈₂ est confirmée.

Dans ce cas, le procédé se poursuit par une étape 234 de test de la valeur du code Ov associé à l'identifiant Kpub reçu dans la table 112.

Si la valeur du code Ov lu dans la table 112 est égale à la première valeur, alors le procédé se poursuit par l'exécution des étapes 206 et 208 pour déplacer la serrure 10 dans son état déverrouillé.

Si lors de l'étape 232, l'intégrité et l'authenticité de la signature S₁₈₂ n'est pas confirmée ou si la valeur du code Ov associé à l'identifiant Kpub reçu est différente de la première valeur, l'exécution des étapes 206 et 208 est inhibée. Ainsi, le code Ov permet d'invalider un terminal spécifique sans avoir besoin de reprogrammer ce terminal spécifique ou d'incrémenter l'indice Cindice de cette serrure.

Ainsi, dans ce mode de réalisation, si un terminal mobile ne comporte pas d'autorisation d'accès pour déverrouiller la serrure 10 mais que cette serrure 10 comporte dans sa table 112 une autorisation d'accès pour ce terminal mobile, la serrure 10 est déplacée dans son état déverrouillé. Ainsi, le système 2 permet aussi d'utiliser des terminaux mobiles qui n'ont pas été programmés à l'avance pour ouvrir une serrure électronique particulière.

L'utilisation des indices Kpr et Cpr permet de plus de garantir que lorsqu'un terminal mobile et une serrure électronique comportent tous les deux des autorisations d'accès l'un pour l'autre, seules l'autorisation d'accès la plus récente est systématiquement utilisée.

### Chapitre II :Variantes :

### Variantes du système de contrôle d'accès :

La porte 6 n'est pas nécessairement une porte d'entrée d'un bâtiment. Il peut aussi s'agir d'une porte d'accès à un local situé à l'intérieur du bâtiment comme, par exemple, un garage ou un local à ordures.

Ici, le serveur 50 a été décrit comme étant une seule entité. Toutefois, le serveur 50 peut, en réalité, être formé d'un ou plusieurs serveurs redondants ou de plusieurs serveurs interconnectés remplissant chacun une fonction spécifique pour gérer les autorisations d'accès.

Le poste 60 d'administration peut être réalisé différemment. Par exemple, dans un autre mode de réalisation, le poste 60 est un téléphone intelligent, plus connu sous le terme de "smartphone", qui exécute un module d'administration du système 2. Dans ce cas, l'interface homme-machine est typiquement un écran tactile.

Les fonctions d'administration du système 2 et de programmation des terminaux mobiles peuvent être réparties sur deux machines différentes, l'une d'elle étant alors dédiée à l'administration du système 2 et l'autre étant dédiée à la programmation des terminaux mobiles. La machine dédiée à l'administration du système 2 n'est alors pas raccordée au programmateur 90.

En variante, la serrure électronique est alimentée et c'est le terminal mobile qui est dépourvu de source d'alimentation. Par exemple, la serrure électronique comporte une batterie ou est raccordée à un réseau d'alimentation électrique. Dans ce cas, c'est la serrure électronique qui alimente le terminal mobile lorsque celui-ci est présenté devant cette serrure électronique. Dans un autre mode de réalisation, le terminal mobile ou la serrure électronique est équipée d'un mécanisme qui transforme le déplacement mécanique du terminal mobile à l'intérieur de la serrure électronique en énergie électrique. Par exemple, un tel mécanisme de récupération d'énergie est décrit dans la demande EP2765264.

La serrure électronique peut être réalisée en deux parties mécaniquement distinctes l'une de l'autre, à savoir un mécanisme de déverrouillage et l'unité 106 de commande. Le mécanisme de déverrouillage comporte l'actionneur 104. Dans ce cas, l'unité 106 de commande est reliée à l'actionneur 104 par une liaison filaire. L'unité 106 est par exemple identique à celle précédemment décrite sauf qu'elle est logée à l'extérieur du cylindre 100. Par exemple, l'unité 106 est logée à l'intérieur d'une centrale d'accès située à proximité de la porte. Une telle centrale d'accès comporte typiquement à minima une tête de lecture apte à établir une liaison courte distance de transmission d'informations avec les terminaux mobiles. Dans ce cas, par exemple, chaque terminal mobile comporte une étiquette RFID (« Radio Frequency Identification ») apte à établir cette liaison courte distance.

En variante, le programmeur 90 permet seulement de programmer un terminal mobile et non pas une serrure électronique. Dans ce cas, les autorisations d'accès à enregistrer dans la table 112 sont systématiquement transportées jusqu'à la serrure 10 en utilisant des terminaux mobiles comme décrit précédemment lors de la phase 160. Alternativement ou en plus, un autre programmeur spécifique pour la programmation des serrures électroniques est utilisé lorsqu'il faut programmer directement une serrure électronique. Dans le cas où le programmeur 90 permet uniquement de programmer un terminal mobile, la lame de ce programmeur 90 peut être omise.

La liaison courte distance entre le programmeur 90 et le terminal 16 n'est pas nécessairement une liaison filaire. En variante, elle est remplacée par une liaison courte distance sans fil.

D'autres modes de réalisation des terminaux mobiles sont possibles. Par exemple, les liaisons filaires entre le terminal mobile et la serrure électronique utilisées pour transmettre les trames d'informations peuvent être remplacées par une liaison courte distance de transmission sans fil. Par exemple, cette liaison courte distance est une liaison conforme à la norme Bluetooth ou utilisant une communication en champ proche plus connue sous l'acronyme NFC ("Near Field Communication").

Le terminal mobile peut aussi être un téléphone mobile équipé du microprocesseur 40 et de la mémoire 42. Dans ce cas, la mémoire 42 est de préférence uniquement accessible à partir du microprocesseur 40. Généralement, le téléphone mobile est dépourvu de lame 38 et la liaison de transmission d'informations entre le téléphone mobile et la serrure électronique est une liaison sans fil comme décrit dans le paragraphe précédent.

Dans cette demande, les mémoires du terminal 16 et de la serrure 10 ont été représentées sous la forme d'un seul bloc de mémoire pour simplifier la description. Toutefois, en pratique, ces mémoires peuvent être chacune composées de plusieurs blocs de mémoire distincts.

### Variantes du procédé :

Le nonce peut être généré par d'autre méthode qu'un tirage aléatoire ou pseudo-aléatoire. Par exemple, lors de chaque exécution de l'étape 174, le nonce est simplement incrémenté d'un pas prédéterminé, par exemple, à partir d'une combinaison de paramètres variables de la serrure 10.

La sélection du cryptogramme KCpub à partir de l'identifiant Cpub reçu peut être réalisée différemment. Par exemple, le terminal 16 sélectionne le premier cryptogramme KCpub contenu dans la table 140, puis les étapes 180, 190 et 192 sont exécutées. Si cela ne permet pas de déverrouiller la serrure 10, alors ces étapes sont réitérées mais en utilisant cette fois-ci le programme KCpub enregistré dans la ligne suivante de la table 140. En réitérant ces opérations, il est possible de retrouver le cryptogramme KCpub qui permet de déverrouiller la serrure 10 sans au préalable avoir à recevoir l'identifiant Kpub de cette serrure électronique. Si aucun cryptogramme KCpub contenu dans la table 140 ne permet de déverrouiller la serrure électronique, alors l'étape 194 est exécutée. Une telle variante est plus particulièrement adaptée au cas des systèmes de contrôle d'accès dans lequel le nombre de serrures électroniques est faible, c'est-à-dire inférieur à quatre ou cinq ou égal à une. Dans cette variante, il n'est pas nécessaire que la serrure électronique transmettre son identifiant Cpub au terminal mobile dans la trame Tᵢₙᵢ.

La même méthode de sélection d'un cryptogramme que celle décrite au paragraphe précédent peut aussi être mise en oeuvre pour sélectionner le cryptogramme KKpub dans la table 112 de la serrure électronique sans pour cela avoir reçu au préalable l'identifiant Kpub du terminal. Dans ce cas, la transmission de l'identifiant Kpub à la serrure électronique peut être omise.

L'étape 200 peut être omise dans tous les modes de réalisation où le cryptogramme KCpub est construit en fonction de l'indice Kindice. En effet, dans ce cas, si l'indice Kindice contenu dans le terminal 16 est différent de celui contenu dans la liste 114 de la serrure 10, alors les cryptogrammes KCpub et KCpub' sont différents et l'étape 192 échoue. La serrure 10 reste donc systématiquement dans son état verrouillé.

L'étape 202 peut être réalisée différemment. Par exemple, au lieu de remplacer l'ancien indice Kindice par l'indice Kindice incrémenté reçu, le microprocesseur 108 ajoute une nouvelle ligne dans la liste 114 et y enregistre l'indice Kindice incrémenté associé à l'identifiant Kpub. La ligne de la liste 114 qui contient l'ancien indice Kindice n'est pas supprimée. Dans ce cas, lors de l'étape 200, le microprocesseur 108 compare l'indice Kindice contenu dans la trame T₁₈₀ à l'indice Kindice le plus élevé enregistré dans la liste 114 et associé à l'identifiant Kpub contenu dans la trame T₁₈₀.

### Variantes des trames d'informations :

Le nonce peut en variante être généré dans la clé. Dans ce cas, la trame Tᵢₙᵢ ne comporte pas le nonce. Par contre, le nonce est incorporé dans les données D₁₈₀ et D₁₈₂ en clair des trames, respectivement, T₁₈₀ et T₁₈₂. Toutefois, ce mode de réalisation est moins avantageux que celui décrit dans le chapitre I. En effet, dans ce cas, une attaque par rejeu est possible en enregistrant puis rejouant la trame T₁₈₀ ou T₁₈₂ générée par un terminal valide.

Dans un autre mode de réalisation, le code d'accès Ov n'est pas utilisé. Il peut donc être omis dans la trame T₁₈₀ et dans les tables 112 et 140. Dans ce cas, l'étape 204 de test de la valeur de ce code Ov est omise et, à l'issue de l'étape 200 ou 202, le procédé se poursuit systématiquement par les étapes 206 et 208. Ainsi, dès que l'intégrité et l'authenticité de la trame T₁₈₀ est confirmée et que l'indice Kindice reçu est supérieur ou égale à celui mémorisé dans la liste 114, la serrure électronique se déplace systématiquement dans son état déverrouillé. Dans ce cas, l'étape 234 peut aussi être omise. Dans une autre variante, le code Ov est omis seulement dans la table 112 des serrures ou seulement dans la table 140 des terminaux. Ainsi, l'une ou l'autre des étapes 204 et 234 peut être conservée.

La signature S₁₈₀ peut être construite en prenant en compte d'autres données que celles précédemment décrites ou au contraire en prenant en compte moins de données que celles précédemment décrites. Par exemple, les données D₁₈₀ peuvent comporter des informations supplémentaires comme, par exemple, des en-têtes de trame d'informations. Les données D₁₈₀ peuvent aussi comporter une date et une heure courante. La date et l'heure courante sont par exemple utilisées pour autoriser le déverrouillage de la serrure 10 à l'aide du terminal 16 uniquement dans certaines plages horaires et uniquement pour certains jours préenregistrés dans la serrure 10.

Dans un autre mode de réalisation simplifié, l'indice Kindice n'est pas utilisé et peut donc être omis. Dans ce cas, la liste 114 est elle aussi omise. Dans ce mode de réalisation simplifié, il n'est alors pas possible d'invalider un terminal mobile simplement en introduisant dans la serrure électronique un nouveau terminal mobile ayant le même identifiant Kpub et un indice Kindice incrémenté. L'invalidation d'un terminal mobile est alors typiquement mise en oeuvre différemment sans utiliser d'indice Kindice. Par exemple, l'invalidation des terminaux mobiles est gérée à l'aide d'une liste noire enregistrée dans la mémoire 110 et contenant les identifiants Kpub de tous les terminaux mobiles qui ne sont plus autorisés à déverrouiller cette serrure électronique. L'invalidation des terminaux mobiles peut aussi être gérée à l'aide d'une « liste blanche » contenue dans la mémoire 110 de chaque serrure électronique. Une liste blanche est une liste qui contient les identifiants Kpub de chaque terminal mobile autorisé à déverrouiller la serrure électronique. Le déverrouillage de la serrure électronique est alors interdit à tout terminal mobile dont l'identifiant Kpub n'appartient pas à cette liste blanche.

L'utilisation des indices Kpr et Cpr peut aussi être omise. Dans ce cas, les étapes 194 et 196 sont omises. Dès lors, si un terminal mobile comporte une autorisation d'accès pour la serrure 10 dans sa table 140, c'est systématiquement cette autorisation d'accès qui est utilisée et cela même si, de son côté, la table 112 de la serrure 10 comporte elle aussi des autorisations d'accès pour ce même terminal mobile. Cette variante est aussi applicable dans le cas particulier où les serrures ne sont jamais programmées, c'est-à-dire que la phase 160 est omise.

D'autres modes de réalisation de la fonction CBC_MAC() sont possibles. Dans les exemples de mode de réalisation précédemment décrits, il n'est pas nécessaire que l'on puisse déchiffrer le cryptogramme KCpub ou KKpub construit pour vérifier l'intégrité et l'authenticité des trames d'informations transmises. Dès lors, la fonction CBC_MAC() peut être une fonction à sens unique, c'est-à-dire une fonction non-inversible, paramétrée par une clé de chiffrement. Par exemple, la fonction CBC_MAC() génère d'abord un condensat ou une empreinte numérique (appelé « hash » en anglais) des données en clair à signer à l'aide d'une fonction de hachage prédéterminée puis c'est ce condensat qui est chiffré à l'aide d'un algorithme de chiffrement symétrique et en utilisant pour cela une clé de chiffrement.

Dans un mode de réalisation avantageux, la fonction CBC_MAC() est égale à la composition d'un algorithme de dérivation de clé et d'un algorithme de chiffrement. Ceci est illustré dans le cas de la construction du cryptogramme KCpub. Dans ce mode de réalisation, pour construire le cryptogramme KCpub, l'exécution de la fonction CBC_MAC() provoque d'abord l'exécution de l'algorithme de dérivation de clé. Ainsi, une clé de chiffrement Caes1 est dérivée à partir de la clé de chiffrement Caes. Cette clé de chiffrement Caes1 est différente de la clé Caes. Par exemple, la clé Caes1 est obtenue à l'aide de la relation suivante : Caes1 = AES_CBC(Caes ; Ct). Ensuite, l'algorithme de chiffrement paramétré par la clé Caes1 est exécuté pour obtenir le cryptogramme KCpub. Ainsi, dans ce mode de réalisation, le cryptogramme KCpub est obtenu en chiffrant les données Kpub, Kindice, Cpub et Cindice à l'aide de la clé Caes1 dérivée de la clé Caes. Dans ce cas là aussi, le cryptogramme KCpub est construit à l'aide de la clé Caes. De façon similaire, ce mode de réalisation peut être appliqué à la fonction CBC_MAC() utilisée pour construire le cryptogramme KKpub. Ainsi, dans ce dernier cas, lorsque la fonction CBC_MAC() est exécutée, une clé Kaes1 est d'abord dérivée à partir de la clé Kaes puis la clé Kaes1 est utilisée comme clé de chiffrement des données Kpub, Kindice, Cpub et Cindice.

En variante, l'algorithme de chiffrement mis en oeuvre lors de l'exécution de la fonction CBC_MAC(), est un algorithme de chiffrement asymétrique. Puisque les signatures S₁₈₀ et S₁₈₂ ne sont pas déchiffrées, même dans le cas de cette variante, l'exécution d'un algorithme de déchiffrement en utilisant la clé publique correspondant à la clé privée utilisée pour construire les signatures S₁₈₀ et S₁₈₂ n'est pas mis oeuvre.

Les fonctions de construction utilisées pour construire les cryptogrammes KCpub, KKpub et les signatures S₁₈₀ et S₁₈₂ peuvent être différentes les unes des autres. Toutefois, de préférence, chacune de ces fonctions fait uniquement intervenir des algorithmes de chiffrement symétrique.

Les variantes décrites ci-dessus dans le cas particulier de la fonction CBC_MAC() sont transposables à la fonction AES_CBC().

En variante, le cryptogramme KCpub est construit sans prendre en compte l'identifiant Cpub. Dans ce cas aussi, le programme KCpub permet uniquement de déverrouiller la serrure 10 car ce cryptogramme dépend de la clé unique Caes de cette serrure 10.

Dans un autre mode de réalisation simplifié, les opérations de dérivation des clés KCpub1 et KKpub1 consistent simplement à prendre les clés KCpub1 et KKpub1 égales, respectivement, aux cryptogrammes KCpub et KKpub. Dans ce cas, ce sont directement les cryptogrammes KCpub et KKpub qui sont utilisés comme clé de chiffrement pour construire les signatures S₁₈₀ et S₁₈₂.

### Variantes de l'utilisation du cryptogramme KCpub :

Les caractéristiques, appelée ici "caractéristique A)", qui permettent d'obtenir les mêmes avantages que ceux obtenus à l'aide du procédé de contrôle d'accès de la demande EP1321901 tout en rendant possible l'utilisation d'algorithmes de chiffrement symétriques à la place des algorithmes de chiffrement asymétriques peuvent être mises en oeuvre indépendamment des autres caractéristiques des procédés de contrôle d'accès décrits ici. Par exemple, dans un mode de réalisation simplifiée, la table 112 est omise. Dans ce cas, aucune autorisation d'accès ne peut être enregistrée dans la serrure électronique. Dès lors, la phase 160 et les étapes 182, 194, 196, 230, 232, 234 sont omises. Dans un tel mode de réalisation, il n'est pas possible de programmer une serrure électronique pour que celle-ci se déplace dans son état déverrouillé lorsqu'un terminal mobile qui n'a pas au préalable été programmé pour déverrouiller cette serrure est présenté.

De même, les caractéristiques A) sont indépendantes de l'utilisation de l'indice Cindice précédemment décrite. Ainsi, en variante, l'indice Cindice n'est pas utilisé et peut être omis. Dans ce cas, il n'est pas possible d'invalider en une seule opération l'ensemble des terminaux mobiles qui étaient préalablement autorisés à déverrouiller cette serrure 10. Dans ce mode de réalisation, les cryptogrammes KCpub et KKpub sont construits sans utiliser l'indice Cindice.

### Variantes de l'utilisation du cryptogramme KKpub

Les caractéristiques, appelée ici "caractéristiques B)", qui permettent d'utiliser à la fois des terminaux mobiles programmés pour ouvrir la serrure 10 et des terminaux mobiles non-programmés pour ouvrir la serrure 10, peuvent être mises en oeuvre indépendamment des caractéristiques A). Dans ce cas, les fonctions CBC_MAC() et/ou AES_MAC() peuvent être remplacées par des fonctions qui jouent le même rôle mais en faisant intervenir des algorithmes de chiffrement asymétriques. Par exemple, la trame T₁₈₀ comporte un certificat cryptographique. Ce certificat cryptographique contient les données D₁₈₀ en clair, les autorisations A₁₈₀, le nonce et une signature numérique S₁₈₀ des données D₁₈₀, des autorisation A₁₈₀ et du nonce. Dans ce cas, la signature numérique S₁₈₀ est typiquement construite en utilisant un algorithme de chiffrement asymétrique paramétré par une clé privée. La vérification de l'intégrité et de l'authenticité des données contenues dans la trame T₁₈₀ reçue par la serrure électronique consiste alors à vérifier l'intégrité et l'authenticité du certificat cryptographique reçu à l'aide de la clé publique correspondant à la clé privée utilisée pour signer ce certificat. Dans un tel mode de réalisation, la vérification de l'intégrité et de l'authenticité impose alors l'exécution d'algorithmes de chiffrement asymétrique.

Les caractéristiques B) peuvent aussi être mise en oeuvre indépendamment de l'utilisation de l'indice Cindice ou de l'utilisation d'un nonce.

Les caractéristiques B) peuvent aussi être mise en oeuvre avec d'autres méthodes pour vérifier que les cryptogrammes construits et pré-enregistrés sont identiques. En particulier, la première information contenue dans la trame T₁₈₀ n'est pas nécessairement la signature S₁₈₀. Par exemple, dans un mode de réalisation simplifié, la signature S₁₈₀ est remplacée par le cryptogramme KCpub pré-enregistré dans le terminal 16. Dans ce cas, la première information est donc directement égale au cryptogramme KCpub. Dans ce cas simplifié, la vérification que le cryptogramme KCpub est identique au cryptogramme KCpub' construit consiste alors simplement à comparer le cryptogramme KCpub contenu dans la trame T₁₈₀ au cryptogramme KCpub' construit par la serrure 10. De façon analogue, la seconde information contenue dans la trame T₁₈₂ n'est pas nécessairement la signature S₁₈₂. Par exemple, la signature S₁₈₂ est remplacée par le cryptogramme KKpub' construit par le terminal 16. Dans ce cas, la seconde information contenue dans la trame T₁₈₂ est directement égale au cryptogramme KKpub'. La vérification que le cryptogramme KKpub' est identique au cryptogramme KKpub consiste alors simplement à comparer le cryptogramme KKpub' contenu dans la trame T₁₈₂ au cryptogramme KKpub contenu dans la table 112. Dans ce cas, de préférence, un mécanisme pour éviter les attaques par rejeu et qui n'utilise pas les signatures S₁₈₀ et S₁₈₂ est en plus implémenté. Il existe encore d'autres méthodes pour construire les première et seconde informations. En fait toute méthode qui permet d'obtenir des première et seconde informations utilisables pour identifier sans ambiguïté, respectivement, les cryptogrammes KCpub et KKpub', est acceptable. Dans un mode de réalisation particulier, les première et seconde informations contenues, respectivement, dans les trames T₁₈₀ et T₁₈₂ sont distinctes des signatures S₁₈₀ et S₁₈₂. Ces informations viennent s'ajouter, dans les trames T₁₈₀ et T₁₈₂, aux signatures S₁₈₀ et S₁₈₂. Dans ce dernier cas, les signatures S₁₈₀ et S₁₈₂ peuvent être construites sans prendre en compte, respectivement, les cryptogrammes KCpub et KKpub' ou, dans une version très simplifiée, les signatures S₁₈₀ et S₁₈₂ sont omises.

Les caractéristiques B) peuvent aussi être mise en oeuvre dans un système où les autorisations d'accès sont transmises par l'intermédiaire d'un canal sécurisé.

Pour la mise en oeuvre des caractéristiques B), les clés Kaes et Caes n'ont pas besoin d'être uniques. Ainsi, la clé Kaes et/ou la clé Caes peut être commune, respectivement, à plusieurs terminaux mobiles et à plusieurs serrures électroniques.

### Variantes de l'utilisation de l'indice Cindice :

L'utilisation de l'indice Cindice décrite ici pour invalider en une seule opération l'ensemble des terminaux mobiles précédemment autorisés à déverrouiller la serrure 10, peut aussi être mise en oeuvre indépendamment des caractéristiques A) et B). Par exemple, l'utilisation de l'indice Cindice tel que décrit ici peut être mise en oeuvre dans des procédés de contrôle d'accès où la vérification de l'intégrité et de l'authenticité de l'indice Cindice transmis est réalisée de façon différente de ce qui a été décrit ici. Par exemple, l'utilisation de l'indice Cindice peut être mise en oeuvre dans les procédés de contrôle d'accès décrits dans la demande EP1024239A1. Dans ce dernier cas, l'indice Cindice est, par exemple, inclus dans l'autorisation d'accès aᵢⱼ générée par un serveur de droit d'accès et transmise sous forme chiffrée par le terminal mobile à la serrure électronique. Dans la demande EP1024239A1, l'autorisation d'accès aᵢⱼ est chiffrée avec une clé sⱼ connue seulement du serveur de droit d'accès et des serrures électroniques de sorte que le terminal mobile ne peut pas falsifier l'autorisation d'accès aᵢⱼ. Dans la serrure électronique, l'autorisation d'accès aᵢⱼ est déchiffrée avec la clé sⱼ puis l'indice Cindice contenu dans l'autorisation d'accès aᵢⱼ déchiffrée est comparée à un indice Cindice pré-enregistré dans la mémoire de la serrure électronique. Si l'indice Cindice contenu dans l'autorisation d'accès aᵢⱼ est inférieur à l'indice Cindice pré-enregistré, alors le déplacement de la serrure électronique dans son état déverrouillé est systématiquement inhibé.

Dans le contexte du procédé de contrôle d'accès de la demande EP1321901, l'indice Cindice transmis par le terminal mobile peut être incorporé au certificat cryptographique transmis par ce terminal mobile à la serrure électronique. Ensuite, le reste du fonctionnement se déduit des explications données dans ce texte.

### Chapitre III : Avantages des modes de réalisation décrits :

### Avantages du procédé utilisant le cryptogramme KCpub :

Grâce au fait que la serrure électronique reconstruit le cryptogramme KCpub à partir de sa clé unique Caes et de l'identifiant Kpub reçu, la serrure électronique n'a pas besoin d'être programmée à l'avance pour se déplacer dans son état déverrouillé lorsqu'un terminal autorisé à déverrouiller cette serrure est présenté. Autrement dit, la serrure électronique n'a pas besoin d'être programmée à l'avance pour être déverrouillée par des terminaux mobiles.

Grâce au fait que la clé Caes est unique pour chaque serrure électronique du système 2, si les informations contenues dans une serrure électronique particulière sont compromises, cela ne remet pas en cause la sécurité du système 2. En particulier, cela ne remet pas en cause la sécurité des autres serrures électroniques du système 2. En effet, les informations compromises sont inutilisables pour déverrouiller d'autres serrures électroniques du système 2.

De façon réciproque, le fait que chaque terminal mobile ne contient pas la clé Caes de la serrure électronique qu'il est autorisé à déverrouiller mais seulement le cryptogramme KCpub correspondant à cette serrure électronique, garantit que si ces informations sont compromises, alors cela ne remet pas non plus en cause la sécurité du système 2. En effet, puisque les cryptogrammes KCpub contenus dans les terminaux mobiles sont, chacun, spécifiques à une serrure électronique et à ce terminal mobile, ils ne peuvent pas être utilisés par d'autres terminaux mobiles pour déverrouiller d'autres serrures électroniques.

Le procédé de contrôle d'accès décrit ici permet de déverrouiller une serrure électronique en absence de toute liaison de transmission d'informations avec le serveur 50 de droit d'accès. De plus, le fait que le nonce soit utilisé pour construire la signature S₁₈₀ rend le système robuste vis-à-vis des attaques par rejeu. Ce procédé n'utilise pas non plus de canal sécurisé pour transmettre les autorisations d'accès. Il n'est donc pas nécessaire de générer des clés de session pour créer un tel canal sécurisé de transmission d'informations.

En fait, en mettant en oeuvre l'enseignement décrit ici, un appariement robuste est créé entre chaque terminal mobile et la chaque serrure électronique que ce terminal mobile est susceptible de déverrouiller. En effet, le cryptogramme KCpub dépend à la fois de l'identifiant Kpub de ce terminal et de la clé unique Caes de la serrure électronique à déverrouiller. Ainsi, ce cryptogramme ne peut être utilisé que par ce terminal mobile pour déverrouiller cette serrure électronique.

Le fait de transmettre l'identifiant Cpub au terminal mobile permet au terminal mobile de sélectionner rapidement le cryptogramme KCpub à utiliser.

Le fait de construire la clé KCpub en fonction de l'identifiant Cpub permet de rendre encore plus difficile la falsification de l'identité de la serrure électronique à déverrouiller.

Dans le cas où le terminal mobile ne comporte aucun cryptogramme KCpub pour déverrouiller la serrure électronique, le fait de transmettre la trame T₁₈₂, à la place de la trame T₁₈₀, permet de provoquer le déverrouillage de la serrure électronique même si ce terminal mobile n'avait pas été préalablement explicitement programmé pour déverrouiller cette serrure électronique. De plus, ce résultat est atteint tout en étant robuste vis-à-vis des cas où les données dans le terminal mobile ou la serrure électronique sont compromises. En effet, le cryptogramme KKpub dépend à la fois de la clé Kaes unique du terminal et de l'identifiant Cpub de la serrure électronique. Ainsi, les informations contenues dans ce terminal mobile et cette serrure ne permettent pas de construire des autorisations d'accès valides pour déverrouiller une autre serrure électronique du système ou autoriser un autre terminal mobile à déverrouiller cette serrure électronique.

L'utilisation de l'identifiant Kpub pour sélectionner le cryptogramme KKpub enregistré dans la mémoire 110 de la serrure électronique permet de sélectionner rapidement cet identifiant KKpub.

Le fait d'utiliser des algorithmes de chiffrement symétriques au lieu d'algorithmes de chiffrement asymétriques simplifie les fonctions exécutées par la serrure électronique et par le terminal mobile pour construire les signatures numériques S₁₈₀ et S₁₈₂. Dès lors les fonctions mises en oeuvre sont plus simples et moins énergivores. La consommation électrique des terminaux mobiles et des serrures électroniques est donc réduite par rapport au cas où des algorithmes de chiffrement asymétriques seraient utilisés.

L'utilisation de l'indice Kindice pour construire le cryptogramme KCpub rend le procédé de contrôle d'accès robuste vis-à-vis des tentatives de falsification visant à rendre un terminal mobile, précédemment invalidé, à nouveau valide.

Le fait d'utiliser un code d'accès Ov pour chaque serrure qu'un terminal est autorisé à déverrouiller permet d'éviter d'avoir à reprogrammer tous les droits d'accès de ce terminal alors qu'un seul de ses droits d'accès est modifié. Par exemple, si le terminal 16 est initialement autorisé à déverrouiller une première et une seconde serrures alors, ultérieurement, pour lui interdire de déverrouiller seulement la seconde serrure, il suffit de modifier la valeur du code d'accès Ov associé à l'identifiant Cpub de la seconde serrure dans sa table 140 tout en laissant son indice Kindice inchangé. Lorsque le code d'accès Ov n'est pas utilisé, la seule solution pour interdire au terminal 16 de déverrouiller la seconde serrure consiste à incrémenter son indice Kindice. Dès lors, en même temps, le cryptogramme KCpub qui l'autorise à déverrouiller la première serrure doit aussi être immédiatement reconstruit à l'aide de la nouvelle valeur de l'indice Kindice sans quoi le terminal 16 ne peut plus déverrouiller la première serrure. De plus, le fait d'intégrer le code Ov dans les données utilisées pour construire la signature S₁₈₀ permet de rendre difficile la falsification de la valeur de ce code Ov.

### Avantages du procédé utilisant le cryptogramme KKpub :

Le procédé de contrôle d'accès décrit ici présente les mêmes avantages que celui décrit dans la demande EP1321901. En particulier, il est possible de programmer un terminal mobile pour déplacer une serrure électronique particulière dans son état déverrouillé. Dans ce cas, il n'est pas nécessaire de programmer cette serrure électronique. Seul le terminal mobile a besoin d'être programmé pour déverrouiller cette serrure électronique. De plus, ici, le fonctionnement inverse est aussi possible. En effet, chaque serrure électronique peut être programmée pour se déplacer dans son état déverrouillé lorsqu'un terminal mobile spécifique non-programmé est présenté devant cette serrure électronique. Dans ce deuxième cas, il n'est pas nécessaire d'avoir programmé à l'avance le terminal mobile. Seule la serrure électronique a été programmée.

L'implémentation de la fonctionnalité inverse est ici réalisée sans amoindrir la sécurité du système de contrôle d'accès. En effet, le fait que le cryptogramme KKpub soit fonction de l'identifiant Kpub du terminal mobile rend difficile la falsification de l'identifiant Kpub transmis dans la trame T₁₈₂.

Le fait que le cryptogramme KKpub utilisé pour vérifier l'intégrité et l'authenticité de la signature S₁₈₂ soit fonction de l'identifiant Kpub de terminal et de l'identifiant Cpub de la serrure électronique empêche que la sécurité du système 2 soit remise en cause si les informations contenues dans la mémoire 110 de la serrure 10 sont compromises. En effet, les cryptogrammes KKpub enregistrés dans la mémoire 110 ne peuvent pas être utilisés pour déverrouiller d'autres serrures électroniques du système 2.

Le fait que le cryptogramme KKpub soit construit à l'aide de la clé Kaes qui n'est pas contenue dans la mémoire de la serrure 10 rend impossible la construction de nouvelles autorisations d'accès pour cette serrure 10 à partir des seules informations contenues dans sa mémoire 110.

Le fait que la clé Kaes soit unique garantit aussi que si les informations contenues dans la mémoire 42 du terminal 16 sont compromises, alors la sécurité des autres serrures électroniques et des autres terminaux mobiles n'est pas remise en cause. En effet, la clé unique Kaes permet seulement de construire des cryptogrammes KKpub' pour ce terminal 16 et non par pour d'autres terminaux mobiles. De plus, si une autre serrure électronique ne contient aucun cryptogramme KKpub correspondant au terminal 16, le fait de connaître la clé unique Kaes du terminal 16 n'est d'aucune aide pour déverrouiller cette autre serrure électronique.

L'utilisation des indices de priorité Kpr et Cpr permet de garantir que lorsque des autorisations d'accès sont enregistrées à la fois dans un terminal mobile et dans une serrure électronique, alors c'est systématiquement les autorisations d'accès les plus récentes qui sont utilisées. Ainsi, l'utilisation d'autorisations d'accès périmées est rendue impossible dans une telle situation.

Le fait d'utiliser un terminal mobile pour transmettre des autorisations d'accès à une serrure électronique évite d'avoir à raccorder cette serrure électronique à un réseau grande distance de transmission d'informations pour la programmer.

Le fait que les signatures numériques transmises du terminal mobile vers la serrure électronique soient fonction d'un nonce permet de rendre le procédé robuste contre les attaques par rejeu. Ces attaques par rejeu consistent à enregistrer puis rejouer les trames d'informations transmises du terminal mobile vers la serrure électronique. De plus, cette robustesse est atteinte sans qu'il soit nécessaire de communiquer avec la serrure électronique par l'intermédiaire d'un canal sécurisé de communication.

Le fait d'établir l'identité des cryptogrammes KKpub et KKpub' à partir de l'identité des signatures S₁₈₂ et S'₁₈₂ permet d'établir l'identité de ces cryptogrammes sans les transmettre entre le terminal mobile et la serrure électronique.

### Avantages des procédés utilisant l'indice Cindice :

L'utilisation de l'indice Cindice permet en une seule opération d'interdire le déverrouillage de cette serrure électronique par l'ensemble des terminaux mobiles qui étaient précédemment autorisés à la déverrouiller. Pour cela, il suffit simplement d'incrémenter l'indice Cindice enregistré dans la mémoire 110 de la serrure électronique. Lorsque le nombre de terminaux mobiles autorisés à déverrouiller une serrure électronique est important, cette façon de procéder pour invalider l'ensemble des terminaux mobiles est beaucoup plus rapide et simple que si chaque terminal mobile devait être reprogrammé individuellement afin de lui interdire de déverrouiller cette serrure électronique. Typiquement, une telle procédure est particulièrement utile lorsqu'une serrure électronique est déplacée d'un bâtiment vers un autre bâtiment.

Le fait d'utiliser l'indice Cindice pour construire le cryptogramme KCpub, permet de rendre simplement le procédé de contrôle d'accès très robuste vis-à-vis des tentatives de falsification de cet indice Cindice dans un terminal mobile.

Le fait d'utiliser l'un des terminaux mobiles pour transmettre la commande d'invalidation générique à une serrure électronique évite d'avoir à raccorder cette serrure électronique à un réseau grande distance de transmission d'informations pour la programmer.

## Revendications

1. Procédé de contrôle d'accès à des bâtiments, ce procédé comportant :
- la fourniture (148) de plusieurs serrures électroniques déplaçables chacune entre :
- un état verrouillé dans lequel elle interdit l'accès au bâtiment, et
- un état déverrouillé dans lequel elle autorise l'accès au bâtiment,
chaque serrure électronique comportant un microprocesseur et une mémoire contenant un identifiant de serrure (Cpub) qui identifie de façon unique cette serrure électronique parmi l'ensemble des serrures électroniques fournies et une première clé de chiffrement (Caes), et
- la fourniture (148) de plusieurs terminaux mobiles d'ouverture, chacun de ces terminaux mobiles comportant un microprocesseur et une mémoire contenant un identifiant de terminal (Kpub) qui identifie de façon unique ce terminal mobile parmi l'ensemble des terminaux mobiles fournis,
- la programmation (150) d'au moins un premier des terminaux mobiles fournis pour l'autoriser à déplacer une première des serrures électroniques fournies dans son état déverrouillé, cette programmation comportant l'enregistrement, dans la mémoire de ce premier terminal mobile, d'un premier cryptogramme (KCpub) et de l'identifiant de serrure (Cpub) de la première serrure électronique associé à ce premier cryptogramme, le premier cryptogramme (KCpub) étant construit à partir de l'identifiant de terminal (Kpub) du premier terminal, de l'identifiant de serrure (Cpub) de la première serrure électronique et en mettant en oeuvre un algorithme de chiffrement prédéterminé paramétré par la première clé de chiffrement (Caes) de la première serrure électronique, la première clé de chiffrement n'étant pas enregistrée dans la mémoire du premier terminal mobile de sorte qu'il n'est pas possible de construire ce premier cryptogramme seulement à partir des informations contenues dans la mémoire de ce premier terminal mobile,
- à chaque fois que le premier terminal mobile souhaite déplacer la première serrure électronique dans son état déverrouillé, le procédé comporte les étapes suivantes :
1) la première serrure électronique transmet (176) au premier terminal mobile son identifiant de serrure (Cpub) contenu dans sa mémoire,
2) en réponse, le premier terminal mobile recherche (178) dans sa mémoire s'il existe un premier cryptogramme (KCpub) associé à l'identifiant de serrure transmis, et
3) lorsqu'un tel premier cryptogramme (KCpub) est trouvé dans la mémoire du premier terminal mobile, alors le premier terminal mobile transmet (188) à la première serrure électronique une première trame (T₁₈₀) d'informations contenant son identifiant de terminal (Kpub) et une première information qui est fonction du premier cryptogramme (KCpub),
4) en réponse à la réception de la première trame d'informations (T₁₈₀), la première serrure électronique :
- construit (192) un deuxième cryptogramme (KCpub') à partir de l'identifiant de terminal (Kpub) contenu dans la première trame d'informations, de son identifiant de serrure (Cpub) contenu dans sa mémoire et en mettant en oeuvre le même algorithme de chiffrement prédéterminé que celui mis en oeuvre pour construire le premier cryptogramme (KCpub) paramétré par la première clé (Caes) contenue dans la mémoire de la première serrure électronique, puis
- à l'aide de la première information contenue dans la première trame (T₁₈₀), la première serrure électronique vérifie (192) que le deuxième cryptogramme (KCpub') construit est identique au premier cryptogramme (KCpub), et
- dans le cas où les premier et deuxième cryptogrammes (KCpub, KCpub') sont identiques, la première serrure électronique est autorisée à se déplacer dans son état déverrouillé et, dans le cas où les premier et deuxième cryptogrammes (KCpub, KCpub') sont différents, le déplacement de la première serrure électronique depuis son état verrouillé vers son état déverrouillé est interdit,
**caractérisé en ce que** :
- la fourniture (148) de plusieurs terminaux mobiles comporte la fourniture de plusieurs terminaux mobiles dont la mémoire de chacun de ces terminaux mobiles comporte une deuxième clé de chiffrement (Kaes) différente de la première clé de chiffrement (Caes), et
- le procédé comporte la programmation (160) d'une seconde des serrures électroniques fournies pour l'autoriser à être déplacée dans son état déverrouillé par le premier terminal mobile, cette programmation comportant l'enregistrement, dans la mémoire de la seconde serrure électronique, d'un troisième cryptogramme (KKpub) construit à partir de l'identifiant (Cpub) de cette seconde serrure électronique, de l'identifiant de terminal (Kpub) du premier terminal mobile et en mettant en oeuvre un algorithme de chiffrement prédéterminé paramétré par la deuxième clé de chiffrement (Kaes) du premier terminal mobile,
la deuxième clé de chiffrement (Kaes) du premier terminal mobile n'étant pas enregistrée dans la mémoire de la seconde serrure électronique de sorte qu'il n'est pas possible de construire le troisième cryptogramme seulement à partir des informations contenues dans la mémoire de cette seconde serrure électronique, et
- à chaque fois que le premier terminal mobile souhaite déplacer la seconde serrure électronique dans son état déverrouillé, le procédé comporte les étapes suivantes :
5) la seconde serrure électronique transmet (176) au premier terminal mobile son identifiant de serrure (Cpub),
6) en réponse, le premier terminal mobile recherche (178) dans sa mémoire un premier cryptogramme associé à l'identifiant de serrure transmis, puis
7) lorsque aucun premier cryptogramme associé à l'identifiant de serrure transmis n'est pas trouvé dans la mémoire du premier terminal mobile :
- le premier terminal mobile construit (220) un quatrième cryptogramme (KKpub') à partir de l'identifiant de serrure (Cpub) transmis par la seconde serrure électronique, de son identifiant de terminal (Kpub) contenu dans sa mémoire et en mettant en oeuvre le même algorithme de chiffrement prédéterminé que celui mis en oeuvre pour construire le troisième cryptogramme (KKpub) paramétré par la deuxième clé de chiffrement (Kaes) contenue dans la mémoire de ce premier terminal mobile, puis
- le premier terminal mobile transmet (226) à la seconde serrure électronique une seconde trame (T₁₈₂) d'informations, à la place de la première trame (T₁₈₀) d'informations, cette seconde trame d'informations contenant l'identifiant de terminal (Kpub) du premier terminal et une seconde information qui est fonction du quatrième cryptogramme (KKpub'), puis
8) en réponse à la réception de la seconde trame d'informations (T₁₈₂), à l'aide de la seconde information contenue dans la seconde trame d'information (T₁₈₂), la seconde serrure électronique vérifie (232), que le troisième cryptogramme (KKpub) enregistré dans sa mémoire est identique au quatrième cryptogramme (KKpub'), et
9) dans le cas où les troisième et quatrième cryptogrammes (KKpub, KKpub') sont identiques, la seconde serrure électronique est autorisée à se déplacer dans son état déverrouillé et, dans le cas où les troisième et quatrième cryptogrammes (KKpub, KKpub') sont différents, le déplacement de la seconde serrure électronique depuis son état verrouillé vers son état déverrouillé est interdit.

2. Procédé selon la revendication 1, dans lequel :
- la programmation (150) du premier terminal mobile comporte également l'enregistrement dans la mémoire de ce premier terminal mobile d'un premier indice de priorité (Kpr) spécifiquement associé au premier cryptogramme (KCpub),
- le procédé comporte la programmation (160) de la première serrure électronique fournies pour l'autoriser à être déplacée dans son état déverrouillé par le premier terminal mobile, cette programmation comportant l'enregistrement, dans la mémoire de la première serrure électronique :
- d'un troisième cryptogramme (KKpub) construit à partir de l'identifiant (Cpub) de cette première serrure électronique, de l'identifiant de terminal (Kpub) du premier terminal mobile et en mettant en oeuvre un algorithme de chiffrement prédéterminé paramétré par la deuxième clé de chiffrement (Kaes) du premier terminal mobile, et
- d'un second indice de priorité (Cpr) spécifiquement associé au troisième cryptogramme (KKpub),
la deuxième clé de chiffrement (Kaes) du premier terminal mobile n'étant pas enregistrée dans la mémoire de la première serrure électronique de sorte qu'il n'est pas possible de construire le troisième cryptogramme seulement à partir des informations contenues dans la mémoire de cette première serrure électronique, et
- lors de l'étape 3), la première trame d'informations (T₁₈₀) contient, en plus, le premier indice de priorité (Kpr) associé au premier cryptogramme (KCpub),
- après l'étape 3) et avant l'étape 4), en réponse à la réception par la première serrure électronique de la première trame d'informations, la première serrure électronique recherche (190) dans sa mémoire un troisième cryptogramme préenregistré (KKpub) et un second indice de priorité (Cpr) associés à l'identifiant de terminal (Kpub) contenu dans la première trame d'informations (T₁₈₀), puis
- lorsqu'un tel second indice de priorité (Cpr) est trouvé dans la mémoire de la première serrure électronique, la première serrure électronique compare (192) le premier indice de priorité (Kpr) contenu dans la première trame d'informations (T₁₈₀) au second indice de priorité (Cpr) trouvé dans la mémoire de la première serrure électronique, et
- lorsque le premier indice de priorité (Kpr) est supérieur au second indice de priorité (Cpr), la première serrure électronique exécute l'étape 4) et inhibe l'exécution de l'étape 7), et
- lorsque le premier indice de priorité (Kpr) est inférieur au second indice de priorité (Cpr), la première serrure électronique exécute l'étape 7) et inhibe l'exécution de l'étape 4).

3. Procédé selon l'une quelconque des revendications précédentes, dans lequel :
- la programmation (160) de la seconde serrure électronique comporte la transmission à la seconde serrure électronique, par un second des terminaux mobiles fournis différent du premier terminal mobile, de l'identifiant de terminal (Kpub) du premier terminal mobile et du troisième cryptogramme (KKpub), et
- en réponse, la seconde serrure électronique enregistre dans sa mémoire le troisième cryptogramme reçu associé à l'identifiant de terminal (Kpub) du premier terminal.

4. Procédé selon l'une quelconque des revendications précédentes, dans lequel la première clé de chiffrement est une clé unique (Kaes).

5. Procédé selon l'une quelconque des revendications précédentes, dans lequel :
- à chaque fois que le premier terminal mobile souhaite déplacer l'une des serrures électroniques fournies dans son état déverrouillé, le premier terminal mobile et cette serrure électronique échangent (176) un nombre aléatoire, appelé "nonce", de sorte que ce nonce est connu à la fois du premier terminal mobile et de cette serrure électronique, ce nonce variant à chaque fois que le procédé de contrôle d'accès est exécuté entre le premier terminal mobile et cette serrure électronique,
- lors de l'étape 3), la première trame d'informations transmise contient une première signature numérique (S₁₈₀) construite à l'aide de l'identifiant de terminal (Kpub) du premier terminal et du nonce échangé, et
- lors de l'étape 7), la seconde trame d'informations transmise contient une deuxième signature numérique (S₁₈₂) construite à l'aide de l'identifiant de terminal (Kpub) du premier terminal et du nonce échangé.

6. Procédé selon l'une quelconque des revendications précédentes, dans lequel la première clé de chiffrement d'une serrure électronique est une clé unique de serrure (Caes) différente de toutes les clés uniques de serrure des autres serrures électroniques.

7. Procédé selon l'une quelconque des revendications précédentes, dans lequel la deuxième clé de chiffrement d'un terminal mobile est une clé unique de terminal (Kaes) différente de toutes les clés uniques de terminal des autres terminaux mobiles.

8. Système de contrôle d'accès à des bâtiments comportant :
- plusieurs serrures électroniques (10) déplaçables chacune entre :
- un état verrouillé dans lequel elle interdit l'accès au bâtiment, et
- un état déverrouillé dans lequel elle autorise l'accès au bâtiment, chaque serrure électronique comportant un microprocesseur (108) et une mémoire (110) contenant un identifiant de serrure (Cpub) qui identifie de façon unique cette serrure électronique parmi l'ensemble des serrures électroniques du système de contrôle d'accès et une première clé de chiffrement (Caes), et
- plusieurs terminaux mobiles (16) d'ouverture, chacun de ces terminaux mobiles comportant un microprocesseur (40) et une mémoire (42) contenant un identifiant de terminal (Kpub) qui identifie de façon unique ce terminal mobile parmi l'ensemble des terminaux mobiles du système de contrôle d'accès,
- au moins un premier des terminaux mobiles étant autorisé à déplacer une première des serrures électroniques dans son état déverrouillé, la mémoire (42) de ce premier terminal mobile contenant à cet effet un premier cryptogramme (KCpub) et l'identifiant de serrure (Cpub) de la première serrure électronique associé à ce premier cryptogramme, le premier cryptogramme (KCpub) étant construit à partir de l'identifiant de terminal (Kpub) du premier terminal, de l'identifiant de serrure (Cpub) de la première serrure électronique et en mettant en oeuvre un algorithme de chiffrement prédéterminé paramétré par la première clé de chiffrement (Caes) de la première serrure électronique, la première clé de chiffrement n'étant pas enregistrée dans la mémoire du premier terminal mobile de sorte qu'il n'est pas possible de construire ce premier cryptogramme (KCpub) seulement à partir des informations contenues dans la mémoire de ce premier terminal mobile,
- le premier terminal mobile et la première serrure électronique étant configurés pour exécuter les étapes suivantes à chaque fois que le premier terminal mobile souhaite déplacer la première serrure électronique dans son état déverrouillé, :
1) la première serrure électronique transmet au premier terminal mobile son identifiant de serrure (Cpub) contenu dans sa mémoire,
2) en réponse, le premier terminal mobile recherche dans sa mémoire s'il existe un premier cryptogramme (KCpub) associé à l'identifiant de serrure transmis, et
3) lorsqu'un tel premier cryptogramme (KCpub) est trouvé dans la mémoire du premier terminal mobile, alors le premier terminal mobile transmet à la première serrure électronique une première trame (T₁₈₀) d'informations contenant son identifiant de terminal (Kpub) et une première information qui est fonction du premier cryptogramme (KCpub),
4) en réponse à la réception de la première trame d'informations (T₁₈₀), la première serrure électronique :
- construit un deuxième cryptogramme (KCpub') à partir de l'identifiant de terminal (Kpub) contenu dans la première trame d'informations, de son identifiant de serrure (Cpub) contenu dans sa mémoire et en mettant en oeuvre le même algorithme de chiffrement prédéterminé que celui mis en oeuvre pour construire le premier cryptogramme (KCpub) paramétré par la clé (Caes) contenue dans la mémoire de la première serrure électronique, puis
- à l'aide de la première information contenue dans la première trame (T₁₈₀), la première serrure électronique vérifie, que le deuxième cryptogramme (KCpub') construit est identique au premier cryptogramme (KCpub), et
- dans le cas où les premier et deuxième cryptogrammes (KCpub, KCpub') sont identiques, la première serrure électronique est autorisée à se déplacer dans son état déverrouillé et, dans le cas où les premier et deuxième cryptogrammes (KCpub, KCpub') sont différents, le déplacement de la première serrure électronique depuis son état verrouillé vers son état déverrouillé est interdit,
**caractérisé en ce que** :
- la mémoire de chacun des terminaux mobiles comporte une deuxième clé de chiffrement (Kaes) différente de la première clé de chiffrement (Caes), et
- une seconde des serrures électroniques étant autorisée à être déplacée dans son état déverrouillé par le premier terminal mobile, la mémoire de cette seconde serrure électronique contenant un troisième cryptogramme (KKpub) construit à partir de l'identifiant (Cpub) de cette seconde serrure électronique, de l'identifiant de terminal (Kpub) du premier terminal mobile et en mettant en oeuvre un algorithme de chiffrement prédéterminé paramétré par la deuxième clé de chiffrement (Kaes) du premier terminal mobile,
la deuxième clé de chiffrement (Kaes) du premier terminal mobile n'étant pas enregistrée dans la mémoire de la seconde serrure électronique de sorte qu'il n'est pas possible de construire le troisième cryptogramme seulement à partir des informations contenues dans la mémoire de cette seconde serrure électronique, et
- le premier terminal et la seconde serrure électronique sont configurés pour exécuter les étapes suivantes à chaque fois que le premier terminal mobile souhaite déplacer la seconde serrure électronique dans son état déverrouillé :
5) la seconde serrure électronique transmet au premier terminal mobile son identifiant de serrure (Cpub),
6) en réponse, le premier terminal mobile recherche dans sa mémoire un premier cryptogramme associé à l'identifiant de serrure transmis, puis
7) lorsque aucun premier cryptogramme associé à l'identifiant de serrure transmis n'est trouvé dans la mémoire du premier terminal mobile :
- le premier terminal mobile construit un quatrième cryptogramme (KKpub') à partir de l'identifiant de serrure (Cpub) transmis par la seconde serrure électronique, de son identifiant de terminal (Kpub) contenu dans sa mémoire et en mettant en oeuvre le même algorithme de chiffrement prédéterminé que celui mis en oeuvre pour construire le troisième cryptogramme (KKpub) paramétré par la deuxième clé de chiffrement (Kaes) contenue dans la mémoire de ce premier terminal mobile, puis
- le premier terminal mobile transmet à la seconde serrure électronique une seconde trame (T₁₈₂) d'informations, à la place de la première trame (T₁₈₀) d'informations, cette seconde trame d'informations contenant l'identifiant de terminal (Kpub) du premier terminal et une seconde information qui est fonction du quatrième cryptogramme (KKpub'), puis
8) en réponse à la réception de la seconde trame d'informations (T₁₈₂), à l'aide de la seconde information contenue dans la seconde trame d'information (T₁₈₂), la seconde serrure électronique vérifie (232), que le troisième cryptogramme (KKpub) enregistré dans sa mémoire est identique au quatrième cryptogramme (KKpub'), et
9) dans le cas où les troisième et quatrième cryptogrammes (KKpub, KKpub') sont identiques, la seconde serrure électronique est autorisée à se déplacer dans son état déverrouillé et, dans le cas où les troisième et quatrième cryptogrammes (KKpub, KKpub') sont différents, le déplacement de la seconde serrure électronique depuis son état verrouillé vers son état déverrouillé est interdit.

9. Premier terminal mobile pour la réalisation d'un système de contrôle d'accès à des bâtiments conforme à la revendication 8, dans lequel ce premier terminal mobile comporte un microprocesseur (40) et une mémoire (42) contenant un identifiant de terminal (Kpub) qui identifie de façon unique ce premier terminal mobile parmi l'ensemble des terminaux mobiles du système de contrôle d'accès,
- ce premier terminal mobile étant autorisé à déplacer une première des serrures électroniques du système de contrôle d'accès dans son état déverrouillé, la mémoire (42) de ce premier terminal mobile contenant à cet effet un premier cryptogramme (KCpub) et l'identifiant de serrure (Cpub) de la première serrure électronique associé à ce premier cryptogramme, le premier cryptogramme (KCpub) étant construit à partir de l'identifiant de terminal (Kpub) du premier terminal, de l'identifiant de serrure (Cpub) de la première serrure électronique et en mettant en oeuvre un algorithme de chiffrement prédéterminé paramétré par la première clé de chiffrement (Caes) de la première serrure électronique, la première clé de chiffrement n'étant pas enregistrée dans la mémoire du premier terminal mobile de sorte qu'il n'est pas possible de construire ce premier cryptogramme (KCpub) seulement à partir des informations contenues dans la mémoire de ce premier terminal mobile,
- le premier terminal mobile étant configuré pour exécuter les étapes suivantes à chaque fois que le premier terminal mobile souhaite déplacer la première serrure électronique dans son état déverrouillé, :
1) le premier terminal mobile reçoit l'identifiant de serrure (Cpub) contenu dans la mémoire de la première serrure électronique,
2) en réponse, le premier terminal mobile recherche dans sa mémoire s'il existe un premier cryptogramme (KCpub) associé à l'identifiant de serrure reçu, et
3) lorsqu'un tel premier cryptogramme (KCpub) est trouvé dans la mémoire du premier terminal mobile, alors le premier terminal mobile transmet à la première serrure électronique une première trame (T₁₈₀) d'informations contenant son identifiant de terminal (Kpub) et une première information qui est fonction du premier cryptogramme (KCpub),
**caractérisé en ce que** :
- la mémoire du premier terminal mobile comporte une deuxième clé de chiffrement (Kaes) différente de la première clé de chiffrement (Caes),
- le premier terminal est configuré pour exécuter les étapes suivantes à chaque fois que le premier terminal mobile souhaite déplacer la seconde serrure électronique dans son état déverrouillé :
5) le premier terminal reçoit de la seconde serrure électronique son identifiant de serrure (Cpub),
6) en réponse, le premier terminal mobile recherche dans sa mémoire un premier cryptogramme associé à l'identifiant de serrure reçu, puis
7) lorsque aucun premier cryptogramme associé à l'identifiant de serrure reçu n'est trouvé dans la mémoire du premier terminal mobile :
- le premier terminal mobile construit un quatrième cryptogramme (KKpub') à partir de l'identifiant de serrure (Cpub) reçu, de son identifiant de terminal (Kpub) contenu dans sa mémoire et en mettant en oeuvre le même algorithme de chiffrement prédéterminé que celui mis en oeuvre pour construire le troisième cryptogramme (KKpub) paramétré par la deuxième clé de chiffrement (Kaes) contenue dans la mémoire de ce premier terminal mobile, puis
- le premier terminal mobile transmet à la seconde serrure électronique une seconde trame (T₁₈₂) d'informations, à la place de la première trame (T₁₈₀) d'informations, cette seconde trame d'informations contenant l'identifiant de terminal (Kpub) du premier terminal et une seconde information qui est fonction du quatrième cryptogramme (KKpub') construit.

10. Premier terminal selon la revendication 9, dans lequel l'identifiant de terminal (Kpub) de ce terminal mobile est enregistré dans une zone non-réinscriptible de sa mémoire.

11. Ensemble d'une première et d'une seconde serrures électroniques pour la réalisation d'un système de contrôle d'accès à des bâtiments conforme à la revendication 8, dans lequel la première et la seconde serrures électroniques (10) sont chacune déplaçables entre :
- un état verrouillé dans lequel elle interdit l'accès au bâtiment, et
- un état déverrouillé dans lequel elle autorise l'accès au bâtiment, chacune des première et seconde serrures électroniques comportant un microprocesseur (108) et une mémoire (110) contenant un identifiant de serrure (Cpub) qui identifie de façon unique cette serrure électronique parmi l'ensemble des serrures électroniques du système de contrôle d'accès et une première clé de chiffrement (Caes), et
- la première serrure électronique est configurée pour exécuter les étapes suivantes à chaque fois que le premier terminal mobile souhaite déplacer la première serrure électronique dans son état déverrouillé, :
4) en réponse à la réception de la première trame d'informations (T₁₈₀), la première serrure électronique :
- construit un deuxième cryptogramme (KCpub') à partir de l'identifiant de terminal (Kpub) contenu dans la première trame d'informations, de son identifiant de serrure (Cpub) contenu dans sa mémoire et en mettant en oeuvre le même algorithme de chiffrement prédéterminé que celui mis en oeuvre pour construire le premier cryptogramme (KCpub) paramétré par la clé (Caes) contenue dans la mémoire de la première serrure électronique, puis
- à l'aide de la première information contenue dans la première trame (T₁₈₀), la première serrure électronique vérifie que le deuxième cryptogramme (KCpub') construit est identique au premier cryptogramme (KCpub), et
- dans le cas où les premier et deuxième cryptogrammes (KCpub, KCpub') sont identiques, la première serrure électronique est autorisée à se déplacer dans son état déverrouillé et, dans le cas où les premier et deuxième cryptogrammes (KCpub, KCpub') sont différents, le déplacement de la première serrure électronique depuis son état verrouillé vers son état déverrouillé est interdit,
**caractérisé en ce que** :
- la seconde des serrures électroniques est autorisée à être déplacée dans son état déverrouillé par le premier terminal mobile, la mémoire de cette seconde serrure électronique contenant un troisième cryptogramme (KKpub) construit à partir de l'identifiant (Cpub) de cette seconde serrure électronique, de l'identifiant de terminal (Kpub) du premier terminal mobile et en mettant en oeuvre un algorithme de chiffrement prédéterminé paramétré par la deuxième clé de chiffrement (Kaes) du premier terminal mobile,
la deuxième clé de chiffrement (Kaes) du premier terminal mobile n'étant pas enregistrée dans la mémoire de la seconde serrure électronique de sorte qu'il n'est pas possible de construire le troisième cryptogramme seulement à partir des informations contenues dans la mémoire de cette seconde serrure électronique, et
- la seconde serrure électronique est configurée pour exécuter les étapes suivantes à chaque fois que le premier terminal mobile souhaite déplacer la seconde serrure électronique dans son état déverrouillé :
5) la seconde serrure électronique transmet au premier terminal mobile son identifiant de serrure (Cpub), puis
8) en réponse à la réception de la seconde trame d'informations (T₁₈₂), à l'aide de la seconde information contenue dans la seconde trame d'information (T₁₈₂), la seconde serrure électronique vérifie (232) que le troisième cryptogramme (KKpub) enregistré dans sa mémoire est identique au quatrième cryptogramme (KKpub'), et
9) dans le cas où les troisième et quatrième cryptogrammes (KKpub, KKpub') sont identiques, la seconde serrure électronique est autorisée à se déplacer dans son état déverrouillé et, dans le cas où les troisième et quatrième cryptogrammes (KKpub, KKpub') sont différents, le déplacement de la seconde serrure électronique depuis son état verrouillé vers son état déverrouillé est interdit.

## Patentansprüche

1. Verfahren zur Zugangskontrolle zu Gebäuden, wobei dieses Verfahren Folgendes umfasst:
- Bereitstellung (148) mehrerer elektronischer Schlösser, die jeweils zwischen :
- einen gesperrten Zustand, in dem sie den Zugang zum Gebäude verbietet, und
- einen entsperrten Zustand, in dem sie den Zugang zum Gebäude erlaubt, jedes elektronische Schloss einen Mikroprozessor und einen Speicher umfasst, der eine Schlosskennung (Cpub), die dieses elektronische Schloss unter allen bereitgestellten elektronischen Schlössern eindeutig identifiziert, und einen ersten Verschlüsselungsschlüssel (Caes) enthält, und
- Bereitstellung (148) mehrerer mobiler Öffnungsterminals, wobei jedes dieser mobilen Terminals einen Mikroprozessor und einen Speicher umfasst, der eine Terminalkennung (Kpub) enthält, die dieses mobile Terminal unter allen bereitgestellten mobilen Terminals eindeutig identifiziert,
- die Programmierung (150) mindestens eines ersten der bereitgestellten mobilen Endgeräte, um ihm zu erlauben, ein erstes der bereitgestellten elektronischen Schlösser in seinem entriegelten Zustand zu bewegen, wobei diese Programmierung die Speicherung eines ersten Kryptogramms (KCpub) und der Schlosskennung (Cpub) des ersten elektronischen Schlosses, die diesem ersten Kryptogramm zugeordnet ist, im Speicher dieses ersten mobilen Endgeräts umfasst, wobei das erste Kryptogramm (KCpub) ausgehend von der Terminalkennung (Kpub) des ersten Endgeräts konstruiert wird, der Schlosskennung (Cpub) des ersten elektronischen Schlosses und durch Implementierung eines vorbestimmten Verschlüsselungsalgorithmus, der durch den ersten Verschlüsselungsschlüssel (Caes) des ersten elektronischen Schlosses parametrisiert wird, wobei der erste Verschlüsselungsschlüssel nicht im Speicher des ersten mobilen Endgeräts gespeichert ist, so dass es nicht möglich ist, dieses erste Kryptogramm nur aus den im Speicher dieses ersten mobilen Endgeräts enthaltenen Informationen zu konstruieren,
- jedes Mal, wenn das erste mobile Endgerät das erste elektronische Schloss in seinen entriegelten Zustand bewegen möchte, umfasst das Verfahren die folgenden Schritte:
1) das erste elektronische Schloss überträgt (176) seine in seinem Speicher enthaltene Schlosskennung (Cpub) an das erste mobile Endgerät,
2) als Antwort sucht das erste mobile Endgerät in seinem Speicher (178) nach einem ersten Kryptogramm (KCpub), das mit der übertragenen Schlosskennung verknüpft ist, und
3) wenn ein solches erstes Kryptogramm (KCpub) im Speicher des ersten mobilen Endgeräts gefunden wird, dann sendet (188) das erste mobile Endgerät an das erste elektronische Schloss einen ersten Informationsrahmen (T₁₈₀ ), der seine Endgerätekennung (Kpub) und eine erste Information enthält, die von dem ersten Kryptogramm (KCpub) abhängig ist,
4) als Reaktion auf den Empfang des ersten Informationsrahmens (T₁₈₀ ) das erste elektronische Schloss :
- ein zweites Kryptogramm (KCpub') anhand der im ersten Informationsrahmen enthaltenen Terminalkennung (Kpub), seiner in seinem Speicher enthaltenen Schlosskennung (Cpub) und unter Anwendung desselben vorbestimmten Verschlüsselungsalgorithmus konstruiert (192), der zur Konstruktion des ersten Kryptogramms (KCpub) eingesetzt wurde und durch den ersten Schlüssel (Caes) parametrisiert wird, der im Speicher des ersten elektronischen Schlosses enthalten ist, und dann
- mithilfe der ersten Information, die in dem ersten Rahmen (T₁₈₀ ) enthalten ist, das erste elektronische Schloss überprüft (192), dass das konstruierte zweite Kryptogramm (KCpub') mit dem ersten Kryptogramm (KCpub) identisch ist, und
- in dem Fall, dass das erste und das zweite Kryptogramm (KCpub, KCpub') identisch sind, dem ersten elektronischen Schloss erlaubt wird, sich in seinen unverriegelten Zustand zu bewegen, und in dem Fall, dass das erste und das zweite Kryptogramm (KCpub, KCpub') unterschiedlich sind, die Bewegung des ersten elektronischen Schlosses von seinem verriegelten Zustand zu seinem unverriegelten Zustand verboten ist,
**dadurch gekennzeichnet, dass** :
- das Bereitstellen (148) mehrerer mobiler Endgeräte das Bereitstellen mehrerer mobiler Endgeräte umfasst, wobei der Speicher jedes dieser mobilen Endgeräte einen zweiten Verschlüsselungsschlüssel (Kaes) enthält, der sich von dem ersten Verschlüsselungsschlüssel (Caes) unterscheidet, und
- das Verfahren die Programmierung (160) eines zweiten der bereitgestellten elektronischen Schlösser umfasst, um ihm zu erlauben, in seinem entriegelten Zustand durch das erste mobile Endgerät bewegt zu werden, wobei diese Programmierung die Speicherung in dem Speicher des zweiten elektronischen Schlosses umfasst, eines dritten Kryptogramms (KKpub), das ausgehend von der Kennung (Cpub) dieses zweiten elektronischen Schlosses, der Terminalkennung (Kpub) des ersten mobilen Endgeräts und unter Anwendung eines vorbestimmten Verschlüsselungsalgorithmus konstruiert wird, der durch den zweiten Verschlüsselungsschlüssel (Kaes) des ersten mobilen Endgeräts parametrisiert wird, der zweite Verschlüsselungsschlüssel (Kaes) des ersten mobilen Endgeräts nicht im Speicher des zweiten elektronischen Schlosses gespeichert ist, so dass es nicht möglich ist, das dritte Kryptogramm allein aus den im Speicher dieses zweiten elektronischen Schlosses enthaltenen Informationen zu konstruieren, und
- jedes Mal, wenn das erste mobile Endgerät das zweite elektronische Schloss in seinen entriegelten Zustand bewegen möchte, umfasst das Verfahren die folgenden Schritte:
5) das zweite elektronische Schloss übermittelt (176) dem ersten mobilen Endgerät seine Schlosskennung (Cpub),
6) als Antwort sucht das erste mobile Endgerät (178) in seinem Speicher nach einem ersten Kryptogramm, das mit der übertragenen Schlosskennung verknüpft ist, und dann
7) wenn kein erstes Kryptogramm, das mit der übertragenen Schlosskennung verknüpft ist, im Speicher des ersten mobilen Endgeräts gefunden wird :
- das erste mobile Endgerät ein viertes Kryptogramm (KKpub') anhand der vom zweiten elektronischen Schloss übertragenen Schlosskennung (Cpub), seiner in seinem Speicher enthaltenen Endgerätekennung (Kpub) und unter Anwendung desselben vorbestimmten Verschlüsselungsalgorithmus konstruiert (220), der zur Konstruktion des dritten Kryptogramms (KKpub) eingesetzt wurde und durch den im Speicher dieses ersten mobilen Endgeräts enthaltenen zweiten Verschlüsselungsschlüssel (Kaes) parametrisiert wurde, und dann
- das erste mobile Endgerät an das zweite elektronische Schloss einen zweiten Informationsrahmen (T₁₈₂ ) anstelle des ersten Informationsrahmens (T₁₈₀ ) überträgt (226), wobei dieser zweite Informationsrahmen die Endgerätekennung (Kpub) des ersten Endgeräts und eine zweite Information enthält, die von dem vierten Kryptogramm (KKpub') abhängt, und dann
8) als Reaktion auf den Empfang des zweiten Informationsrahmens (T₁₈₂ ) anhand der in dem zweiten Informationsrahmen (T₁₈₂ ) enthaltenen zweiten Information das zweite elektronische Schloss überprüft (232), dass das in seinem Speicher gespeicherte dritte Kryptogramm (KKpub) mit dem vierten Kryptogramm (KKpub') identisch ist, und
9) in dem Fall, dass das dritte und das vierte Kryptogramm (KKpub, KKpub') identisch sind, das zweite elektronische Schloss sich in seinen unverriegelten Zustand bewegen darf, und in dem Fall, dass das dritte und das vierte Kryptogramm (KKpub, KKpub') unterschiedlich sind, die Bewegung des zweiten elektronischen Schlosses von seinem verriegelten Zustand in seinen unverriegelten Zustand verboten ist.

2. Verfahren nach Anspruch 1, wobei:
- die Programmierung (150) des ersten mobilen Endgeräts auch die Speicherung eines ersten Prioritätsindex (Kpr), der speziell mit dem ersten Kryptogramm (KCpub) verknüpft ist, im Speicher dieses ersten mobilen Endgeräts umfasst,
- das Verfahren die Programmierung (160) des ersten elektronischen Schlosses umfasst, das bereitgestellt wird, um ihm zu erlauben, in seinem entriegelten Zustand durch das erste mobile Endgerät bewegt zu werden, wobei diese Programmierung die Registrierung im Speicher des ersten elektronischen Schlosses umfasst:
- eines dritten Kryptogramms (KKpub), das ausgehend von der Kennung (Cpub) dieses ersten elektronischen Schlosses, der Terminalkennung (Kpub) des ersten mobilen Endgeräts und durch Implementierung eines vorbestimmten Verschlüsselungsalgorithmus, der durch den zweiten Verschlüsselungsschlüssel (Kaes) des ersten mobilen Endgeräts parametrisiert wird, aufgebaut wird, und
- eines zweiten Prioritätsindex (Cpr), der speziell mit dem dritten Kryptogramm (KKpub) verknüpft ist,
der zweite Verschlüsselungsschlüssel (Kaes) des ersten mobilen Endgeräts nicht im Speicher des ersten elektronischen Schlosses gespeichert ist, so dass es nicht möglich ist, das dritte Kryptogramm nur anhand der im Speicher dieses ersten elektronischen Schlosses enthaltenen Informationen zu konstruieren, und
- in Schritt 3) der erste Informationsrahmen (T₁₈₀ ) zusätzlich den ersten Prioritätsindex (Kpr) enthält, der dem ersten Kryptogramm (KCpub) zugeordnet ist,
- nach Schritt 3) und vor Schritt 4) als Reaktion auf den Empfang des ersten Informationsrahmens durch das erste elektronische Schloss das erste elektronische Schloss in seinem Speicher nach einem dritten vorgespeicherten Kryptogramm (KKpub) und einem zweiten Prioritätsindex (Cpr) sucht (190), die mit der in dem ersten Informationsrahmen (T₁₈₀ ) enthaltenen Terminalkennung (Kpub) verknüpft sind, und dann
- wenn ein solcher zweiter Prioritätsindex (Cpr) im Speicher des ersten elektronischen Schlosses gefunden wird, vergleicht (192) das erste elektronische Schloss den ersten Prioritätsindex (Kpr), der in dem ersten Informationsrahmen (T₁₈₀ ) enthalten ist, mit dem zweiten Prioritätsindex (Cpr), der im Speicher des ersten elektronischen Schlosses gefunden wird, und
- wenn der erste Prioritätsindex (Kpr) größer als der zweite Prioritätsindex (Cpr) ist, führt das erste elektronische Schloss Schritt 4) aus und hemmt die Ausführung von Schritt 7), und
- wenn der erste Prioritätsindex (Kpr) niedriger als der zweite Prioritätsindex (Cpr) ist, führt das erste elektronische Schloss Schritt 7) aus und hemmt die Ausführung von Schritt 4).

3. Verfahren nach einem der vorhergehenden Ansprüche, wobei:
- das Programmieren (160) des zweiten elektronischen Schlosses das Übertragen der Terminalkennung (Kpub) des ersten mobilen Terminals und des dritten Kryptogramms (KKpub) durch ein zweites der bereitgestellten mobilen Terminals, das sich von dem ersten mobilen Terminal unterscheidet, an das zweite elektronische Schloss umfasst, und
- als Reaktion darauf speichert das zweite elektronische Schloss das dritte empfangene Kryptogramm, das mit der Terminalkennung (Kpub) des ersten Terminals verknüpft ist, in seinem Speicher.

4. Verfahren nach einem der vorhergehenden Ansprüche, wobei der erste Verschlüsselungsschlüssel ein eindeutiger Schlüssel (Kaes) ist.

5. Verfahren nach einem der vorhergehenden Ansprüche, wobei:
- jedes Mal, wenn das erste mobile Endgerät eines der bereitgestellten elektronischen Schlösser in seinem entriegelten Zustand bewegen möchte, tauschen das erste mobile Endgerät und dieses elektronische Schloss eine Zufallszahl aus (176), die "Nonce" genannt wird, so dass diese Nonce sowohl dem ersten mobilen Endgerät als auch diesem elektronischen Schloss bekannt ist, wobei diese Nonce jedes Mal variiert, wenn das Verfahren zur Zugangskontrolle zwischen dem ersten mobilen Endgerät und diesem elektronischen Schloss ausgeführt wird,
- in Schritt 3) der erste übertragene Informationsrahmen eine erste digitale Signatur (S₁₈₀ ) enthält, die mithilfe der Terminalkennung (Kpub) des ersten Terminals und des ausgetauschten Nonce konstruiert wurde, und
- in Schritt 7) der zweite übertragene Informationsrahmen eine zweite digitale Signatur (S₁₈₂ ) enthält, die mithilfe der Terminalkennung (Kpub) des ersten Terminals und der ausgetauschten Nonce konstruiert wurde.

6. Verfahren nach einem der vorhergehenden Ansprüche, wobei der erste Verschlüsselungsschlüssel eines elektronischen Schlosses ein eindeutiger Schlossschlüssel (Caes) ist, der sich von allen eindeutigen Schlossschlüsseln der anderen elektronischen Schlösser unterscheidet.

7. Verfahren nach einem der vorhergehenden Ansprüche, wobei der zweite Verschlüsselungsschlüssel eines mobilen Endgeräts ein eindeutiger Endgeräteschlüssel (Kaes) ist, der sich von allen eindeutigen Endgeräteschlüsseln der anderen mobilen Endgeräte unterscheidet.

8. System zur Zugangskontrolle zu Gebäuden mit:
- mehrere elektronische Schlösser (10), die jeweils beweglich sind zwischen :
- einen gesperrten Zustand, in dem sie den Zugang zum Gebäude verbietet, und
- einen entsperrten Zustand, in dem sie den Zugang zum Gebäude erlaubt, jedes elektronische Schloss einen Mikroprozessor (108) und einen Speicher (110) umfasst, der eine Schlosskennung (Cpub), die dieses elektronische Schloss unter allen elektronischen Schlössern des Zugangskontrollsystems eindeutig identifiziert, und einen ersten Verschlüsselungsschlüssel (Caes) enthält, und
- mehrere mobile Öffnungsterminals (16), wobei jedes dieser mobilen Terminals einen Mikroprozessor (40) und einen Speicher (42) umfasst, der eine Terminalkennung (Kpub) enthält, die dieses mobile Terminal unter allen mobilen Terminals des Zugangskontrollsystems eindeutig identifiziert,
- mindestens ein erstes der mobilen Endgeräte berechtigt ist, ein erstes der elektronischen Schlösser in seinem entriegelten Zustand zu bewegen, wobei der Speicher (42) dieses ersten mobilen Endgeräts zu diesem Zweck ein erstes Kryptogramm (KCpub) und die diesem ersten Kryptogramm zugeordnete Schlosskennung (Cpub) des ersten elektronischen Schlosses enthält, wobei das erste Kryptogramm (KCpub) ausgehend von der Terminalkennung (Kpub) des ersten Endgeräts konstruiert wird, der Schlosskennung (Cpub) des ersten elektronischen Schlosses und durch Implementierung eines vorbestimmten Verschlüsselungsalgorithmus, der durch den ersten Verschlüsselungsschlüssel (Caes) des ersten elektronischen Schlosses parametrisiert wird, wobei der erste Verschlüsselungsschlüssel nicht im Speicher des ersten mobilen Endgeräts gespeichert ist, so dass es nicht möglich ist, dieses erste Kryptogramm (KCpub) nur aus den im Speicher dieses ersten mobilen Endgeräts enthaltenen Informationen zu konstruieren,
- wobei das erste mobile Endgerät und das erste elektronische Schloss so konfiguriert sind, dass sie die folgenden Schritte jedes Mal ausführen, wenn das erste mobile Endgerät das erste elektronische Schloss in seinen unverriegelten Zustand bewegen möchte, :
1) Das erste elektronische Schloss überträgt seine in seinem Speicher enthaltene Schlosskennung (Cpub) an das erste mobile Endgerät,
2) als Antwort sucht das erste mobile Endgerät in seinem Speicher, ob es ein erstes Kryptogramm (KCpub) gibt, das mit der übertragenen Schlosskennung verknüpft ist, und
3) wenn ein solches erstes Kryptogramm (KCpub) im Speicher des ersten mobilen Endgeräts gefunden wird, dann sendet das erste mobile Endgerät an das erste elektronische Schloss einen ersten Rahmen (T₁₈₀ ) von Informationen, der seine Endgerätekennung (Kpub) und eine erste Information enthält, die von dem ersten Kryptogramm (KCpub) abhängt,
4) als Reaktion auf den Empfang des ersten Informationsrahmens (T₁₈₀ ) das erste elektronische Schloss :
- ein zweites Kryptogramm (KCpub') anhand der im ersten Informationsrahmen enthaltenen Terminalkennung (Kpub), seiner in seinem Speicher enthaltenen Schlosskennung (Cpub) und unter Anwendung desselben vorbestimmten Verschlüsselungsalgorithmus, der zur Erstellung des ersten Kryptogramms (KCpub) eingesetzt wurde, parametrisiert durch den im Speicher des ersten elektronischen Schlosses enthaltenen Schlüssel (Caes), konstruiert, und dann
- das erste elektronische Schloss anhand der ersten Information, die in dem ersten Rahmen (T₁₈₀ ) enthalten ist, überprüft, dass das konstruierte zweite Kryptogramm (KCpub') mit dem ersten Kryptogramm (KCpub) identisch ist, und
- in dem Fall, dass das erste und das zweite Kryptogramm (KCpub, KCpub') identisch sind, dem ersten elektronischen Schloss erlaubt wird, sich in seinen unverriegelten Zustand zu bewegen, und in dem Fall, dass das erste und das zweite Kryptogramm (KCpub, KCpub') unterschiedlich sind, die Bewegung des ersten elektronischen Schlosses von seinem verriegelten Zustand zu seinem unverriegelten Zustand verboten ist,
**dadurch gekennzeichnet, dass** :
- der Speicher jedes der mobilen Endgeräte einen zweiten Verschlüsselungsschlüssel (Kaes) enthält, der sich von dem ersten Verschlüsselungsschlüssel (Caes) unterscheidet, und
- ein zweites der elektronischen Schlösser in seinem durch das erste mobile Endgerät entriegelten Zustand bewegt werden darf, wobei der Speicher dieses zweiten elektronischen Schlosses ein drittes Kryptogramm (KKpub) enthält, das ausgehend von der Kennung (Cpub) dieses zweiten elektronischen Schlosses, der Endgerätekennung (Kpub) des ersten mobilen Endgeräts und durch Umsetzung eines vorbestimmten Verschlüsselungsalgorithmus, der durch den zweiten Verschlüsselungsschlüssel (Kaes) des ersten mobilen Endgeräts parametrisiert wird, konstruiert wurde,
der zweite Verschlüsselungsschlüssel (Kaes) des ersten mobilen Endgeräts nicht im Speicher des zweiten elektronischen Schlosses gespeichert ist, so dass es nicht möglich ist, das dritte Kryptogramm allein aus den im Speicher dieses zweiten elektronischen Schlosses enthaltenen Informationen zu konstruieren, und
- das erste Endgerät und das zweite elektronische Schloss so konfiguriert sind, dass sie die folgenden Schritte jedes Mal ausführen, wenn das erste mobile Endgerät das zweite elektronische Schloss in seinen unverriegelten Zustand bewegen möchte :
5) das zweite elektronische Schloss übermittelt dem ersten mobilen Endgerät seine Schlosskennung (Cpub),
6) als Antwort sucht das erste mobile Endgerät in seinem Speicher nach einem ersten Kryptogramm, das mit der übertragenen Schlosskennung verknüpft ist, und dann
7) wenn kein erstes Kryptogramm, das mit der übertragenen Schlosskennung verknüpft ist, im Speicher des ersten mobilen Endgeräts gefunden wird :
- das erste mobile Endgerät ein viertes Kryptogramm (KKpub') anhand der vom zweiten elektronischen Schloss übertragenen Schlosskennung (Cpub), seiner in seinem Speicher enthaltenen Endgerätekennung (Kpub) und unter Anwendung desselben vorbestimmten Verschlüsselungsalgorithmus konstruiert, der zur Konstruktion des dritten Kryptogramms (KKpub) eingesetzt wurde, parametrisiert durch den zweiten Verschlüsselungsschlüssel (Kaes), der im Speicher dieses ersten mobilen Endgeräts enthalten ist, und dann
- das erste mobile Endgerät anstelle des ersten Informationsrahmens (T₁₈₀ ) einen zweiten Informationsrahmen (T₁₈₂ ) an das zweite elektronische Schloss überträgt, wobei dieser zweite Informationsrahmen die Endgerätekennung (Kpub) des ersten Endgeräts und eine zweite Information enthält, die von dem vierten Kryptogramm (KKpub') abhängt, und dann
8) als Reaktion auf den Empfang des zweiten Informationsrahmens (T₁₈₂ ) anhand der in dem zweiten Informationsrahmen (T₁₈₂ ) enthaltenen zweiten Information das zweite elektronische Schloss überprüft (232), dass das in seinem Speicher gespeicherte dritte Kryptogramm (KKpub) mit dem vierten Kryptogramm (KKpub') identisch ist, und
9) in dem Fall, dass das dritte und das vierte Kryptogramm (KKpub, KKpub') identisch sind, das zweite elektronische Schloss sich in seinen unverriegelten Zustand bewegen darf, und in dem Fall, dass das dritte und das vierte Kryptogramm (KKpub, KKpub') unterschiedlich sind, die Bewegung des zweiten elektronischen Schlosses von seinem verriegelten Zustand in seinen unverriegelten Zustand verboten ist.

9. Erstes mobiles Endgerät zur Realisierung eines Zugangskontrollsystems für Gebäude gemäß Anspruch 8, wobei dieses erste mobile Endgerät einen Mikroprozessor (40) und einen Speicher (42) umfasst, der eine Endgerätekennung (Kpub) enthält, die dieses erste mobile Endgerät unter der Gesamtheit der mobilen Endgeräte des Zugangskontrollsystems eindeutig identifiziert,
- dieses erste mobile Endgerät berechtigt ist, ein erstes der elektronischen Schlösser des Zugangskontrollsystems in seinem entriegelten Zustand zu bewegen, wobei der Speicher (42) dieses ersten mobilen Endgeräts zu diesem Zweck ein erstes Kryptogramm (KCpub) und die diesem ersten Kryptogramm zugeordnete Schlosskennung (Cpub) des ersten elektronischen Schlosses enthält, wobei das erste Kryptogramm (KCpub) ausgehend von der Terminalkennung (Kpub) des ersten Endgeräts konstruiert wird, der Schlosskennung (Cpub) des ersten elektronischen Schlosses und durch Implementierung eines vorbestimmten Verschlüsselungsalgorithmus, der durch den ersten Verschlüsselungsschlüssel (Caes) des ersten elektronischen Schlosses parametrisiert wird, wobei der erste Verschlüsselungsschlüssel nicht im Speicher des ersten mobilen Endgeräts gespeichert ist, so dass es nicht möglich ist, dieses erste Kryptogramm (KCpub) nur aus den im Speicher dieses ersten mobilen Endgeräts enthaltenen Informationen zu konstruieren,
- wobei das erste mobile Endgerät so konfiguriert ist, dass es die folgenden Schritte jedes Mal ausführt, wenn das erste mobile Endgerät das erste elektronische Schloss in seinen unverriegelten Zustand bewegen möchte, :
1) das erste mobile Endgerät die Schlosskennung (Cpub) empfängt, die im Speicher des ersten elektronischen Schlosses enthalten ist,
2) als Antwort sucht das erste mobile Endgerät in seinem Speicher, ob es ein erstes Kryptogramm (KCpub) gibt, das mit der empfangenen Schlosskennung verknüpft ist, und
3) wenn ein solches erstes Kryptogramm (KCpub) im Speicher des ersten mobilen Endgeräts gefunden wird, dann sendet das erste mobile Endgerät an das erste elektronische Schloss einen ersten Rahmen (T₁₈₀ ) von Informationen, der seine Endgerätekennung (Kpub) und eine erste Information enthält, die von dem ersten Kryptogramm (KCpub) abhängt,
**dadurch gekennzeichnet, dass** :
- der Speicher des ersten mobilen Endgeräts einen zweiten Verschlüsselungsschlüssel (Kaes) enthält, der sich von dem ersten Verschlüsselungsschlüssel (Caes) unterscheidet,
- das erste Endgerät so konfiguriert ist, dass es die folgenden Schritte jedes Mal ausführt, wenn das erste mobile Endgerät das zweite elektronische Schloss in seinen unverriegelten Zustand bewegen möchte :
5) das erste Terminal vom zweiten elektronischen Schloss dessen Schlosskennung (Cpub) empfängt,
6) als Antwort sucht das erste mobile Endgerät in seinem Speicher nach einem ersten Kryptogramm, das mit der empfangenen Schlosskennung verknüpft ist, und dann
7) wenn kein erstes Kryptogramm, das mit der empfangenen Schlosskennung verknüpft ist, im Speicher des ersten mobilen Endgeräts gefunden wird :
- das erste mobile Endgerät ein viertes Kryptogramm (KKpub') anhand der empfangenen Schlosskennung (Cpub), seiner in seinem Speicher enthaltenen Endgerätekennung (Kpub) und unter Anwendung desselben vorbestimmten Verschlüsselungsalgorithmus, der zur Erstellung des dritten Kryptogramms (KKpub) eingesetzt wurde, parametrisiert durch den zweiten Verschlüsselungsschlüssel (Kaes), der im Speicher dieses ersten mobilen Endgeräts enthalten ist, erstellt, und dann
- das erste mobile Endgerät anstelle des ersten Informationsrahmens (T₁₈₀ ) einen zweiten Informationsrahmen (T₁₈₂ ) an das zweite elektronische Schloss überträgt, wobei dieser zweite Informationsrahmen die Endgerätekennung (Kpub) des ersten Endgeräts und eine zweite Information enthält, die von dem konstruierten vierten Kryptogramm (KKpub') abhängt.

10. Erstes Endgerät nach Anspruch 9, wobei die Endgerätekennung (Kpub) dieses mobilen Endgeräts in einem nicht wiederbeschreibbaren Bereich seines Speichers gespeichert ist.

11. Anordnung eines ersten und eines zweiten elektronischen Schlosses zur Herstellung eines Zugangskontrollsystems für Gebäude gemäß Anspruch 8, wobei das erste und das zweite elektronische Schloss (10) jeweils beweglich sind zwischen :
- einen gesperrten Zustand, in dem sie den Zugang zum Gebäude verbietet, und
- einen entsperrten Zustand, in dem sie den Zugang zum Gebäude erlaubt,
wobei jedes der ersten und zweiten elektronischen Schlösser einen Mikroprozessor (108) und einen Speicher (110) umfasst, der eine Schlosskennung (Cpub), die dieses elektronische Schloss unter allen elektronischen Schlössern des Zugangskontrollsystems eindeutig identifiziert, und einen ersten Verschlüsselungsschlüssel (Caes) enthält, und
- das erste elektronische Schloss so konfiguriert ist, dass es die folgenden Schritte jedes Mal ausführt, wenn das erste mobile Endgerät das erste elektronische Schloss in seinen unverriegelten Zustand bewegen möchte, :
4) als Reaktion auf den Empfang des ersten Informationsrahmens (T₁₈₀ ) das erste elektronische Schloss :
- ein zweites Kryptogramm (KCpub') anhand der im ersten Informationsrahmen enthaltenen Terminalkennung (Kpub), seiner in seinem Speicher enthaltenen Schlosskennung (Cpub) und unter Anwendung desselben vorbestimmten Verschlüsselungsalgorithmus, der zur Erstellung des ersten Kryptogramms (KCpub) eingesetzt wurde, parametrisiert durch den im Speicher des ersten elektronischen Schlosses enthaltenen Schlüssel (Caes), konstruiert, und dann
- mithilfe der ersten Information, die in dem ersten Rahmen (T₁₈₀ ) enthalten ist, das erste elektronische Schloss überprüft, ob das konstruierte zweite Kryptogramm (KCpub') mit dem ersten Kryptogramm (KCpub) identisch ist, und
- in dem Fall, dass das erste und das zweite Kryptogramm (KCpub, KCpub') identisch sind, dem ersten elektronischen Schloss erlaubt wird, sich in seinen unverriegelten Zustand zu bewegen, und in dem Fall, dass das erste und das zweite Kryptogramm (KCpub, KCpub') unterschiedlich sind, die Bewegung des ersten elektronischen Schlosses von seinem verriegelten Zustand zu seinem unverriegelten Zustand verboten ist,
**dadurch gekennzeichnet, dass** :
- das zweite der elektronischen Schlösser in seinem durch das erste mobile Endgerät entriegelten Zustand bewegt werden darf, wobei der Speicher dieses zweiten elektronischen Schlosses ein drittes Kryptogramm (KKpub) enthält, das ausgehend von der Kennung (Cpub) dieses zweiten elektronischen Schlosses, der Endgerätekennung (Kpub) des ersten mobilen Endgeräts und durch Umsetzung eines vorbestimmten Verschlüsselungsalgorithmus, der durch den zweiten Verschlüsselungsschlüssel (Kaes) des ersten mobilen Endgeräts parametrisiert wird, konstruiert wird,
der zweite Verschlüsselungsschlüssel (Kaes) des ersten mobilen Endgeräts nicht im Speicher des zweiten elektronischen Schlosses gespeichert ist, so dass es nicht möglich ist, das dritte Kryptogramm allein aus den im Speicher dieses zweiten elektronischen Schlosses enthaltenen Informationen zu konstruieren, und
- das zweite elektronische Schloss so konfiguriert ist, dass es die folgenden Schritte jedes Mal ausführt, wenn das erste mobile Endgerät das zweite elektronische Schloss in seinen unverriegelten Zustand bewegen möchte :
5) das zweite elektronische Schloss dem ersten mobilen Endgerät seine Schlosskennung (Cpub) übermittelt, und dann
8) als Reaktion auf den Empfang des zweiten Informationsrahmens (T₁₈₂ ) anhand der in dem zweiten Informationsrahmen (T₁₈₂ ) enthaltenen zweiten Information das zweite elektronische Schloss überprüft (232), dass das in seinem Speicher gespeicherte dritte Kryptogramm (KKpub) mit dem vierten Kryptogramm (KKpub') identisch ist, und
9) in dem Fall, dass das dritte und das vierte Kryptogramm (KKpub, KKpub') identisch sind, das zweite elektronische Schloss sich in seinen unverriegelten Zustand bewegen darf, und in dem Fall, dass das dritte und das vierte Kryptogramm (KKpub, KKpub') unterschiedlich sind, die Bewegung des zweiten elektronischen Schlosses von seinem verriegelten Zustand in seinen unverriegelten Zustand verboten ist.

## Claims

1. A method of controlling access to buildings, the method comprising :
- the supply (148) of a number of electronic locks, each movable between :
- a locked state in which it prevents access to the building, and
- an unlocked state in which it authorises access to the building,
each electronic lock comprising a microprocessor and a memory containing a lock identifier (Cpub) which uniquely identifies this electronic lock among all the electronic locks provided and a first encryption key (Caes), and
- the provision (148) of a plurality of opening mobile terminals, each of these mobile terminals comprising a microprocessor and a memory containing a terminal identifier (Kpub) which uniquely identifies this mobile terminal among all the mobile terminals provided,
- programming (150) at least a first one of the mobile terminals supplied to authorise it to move a first one of the electronic locks supplied in its unlocked state, this programming comprising the recording, in the memory of this first mobile terminal, of a first cryptogram (KCpub) and of the lock identifier (Cpub) of the first electronic lock associated with this first cryptogram, the first cryptogram (KCpub) being constructed from the terminal identifier (Kpub) of the first terminal, the lock identifier (Cpub) of the first electronic lock and by implementing a predetermined encryption algorithm parameterised by the first encryption key (Caes) of the first electronic lock, the first encryption key not being stored in the memory of the first mobile terminal so that it is not possible to construct this first cryptogram solely from the information contained in the memory of this first mobile terminal,
- each time the first mobile terminal wishes to move the first electronic lock to its unlocked state, the method comprises the following steps:
1) the first electronic lock transmits (176) its lock identifier (Cpub) contained in its memory to the first mobile terminal,
2) in response, the first mobile terminal searches its memory (178) to see if there is a first cryptogram (KCpub) associated with the transmitted lock identifier, and
3) when such a first cryptogram (KCpub) is found in the memory of the first mobile terminal, then the first mobile terminal transmits (188) to the first electronic lock a first frame (T₁₈₀ ) of information containing its terminal identifier (Kpub) and a first item of information which is a function of the first cryptogram (KCpub),
4) in response to receiving the first information frame (T₁₈₀ ), the first electronic lock :
- constructs (192) a second cryptogram (KCpub') from the terminal identifier (Kpub) contained in the first information frame, from its lock identifier (Cpub) contained in its memory and by implementing the same predetermined encryption algorithm as that implemented to construct the first cryptogram (KCpub) parameterised by the first key (Caes) contained in the memory of the first electronic lock, then
- using the first information contained in the first frame (T₁₈₀ ), the first electronic lock checks (192) that the second cryptogram (KCpub') constructed is identical to the first cryptogram (KCpub), and
- if the first and second cryptograms (KCpub, KCpub') are identical, the first electronic lock is authorised to move to its unlocked state and, if the first and second cryptograms (KCpub, KCpub') are different, the first electronic lock is prevented from moving from its locked state to its unlocked state,
**characterised in that** :
- the provision (148) of a plurality of mobile terminals comprises the provision of a plurality of mobile terminals the memory of each of which comprises a second encryption key (Kaes) different from the first encryption key (Caes), and
- the method comprises the programming (160) of a second of the electronic locks provided to authorise it to be moved in its unlocked state by the first mobile terminal, this programming comprising the recording, in the memory of the second electronic lock, of a third cryptogram (KKpub) constructed from the identifier (Cpub) of this second electronic lock, from the terminal identifier (Kpub) of the first mobile terminal and by implementing a predetermined encryption algorithm parameterised by the second encryption key (Kaes) of the first mobile terminal,
the second encryption key (Kaes) of the first mobile terminal not being stored in the memory of the second electronic lock so that it is not possible to construct the third cryptogram solely from the information contained in the memory of this second electronic lock, and
- each time the first mobile terminal wishes to move the second electronic lock to its unlocked state, the method comprises the following steps:
5) the second electronic lock transmits (176) its lock identifier (Cpub) to the first mobile terminal,
6) in response, the first mobile terminal searches (178) its memory for a first cryptogram associated with the transmitted lock identifier, then
7) if no first cryptogram associated with the transmitted lock identifier is found in the memory of the first mobile terminal:
- the first mobile terminal (220) constructs a fourth cryptogram (KKpub') from the lock identifier (Cpub) transmitted by the second electronic lock, from its terminal identifier (Kpub) contained in its memory and by implementing the same predetermined encryption algorithm as that implemented to construct the third cryptogram (KKpub) parameterised by the second encryption key (Kaes) contained in the memory of this first mobile terminal, then
- the first mobile terminal transmits (226) to the second electronic lock a second frame (T₁₈₂ ) of information, in place of the first frame (T₁₈₀ ) of information, this second frame of information containing the terminal identifier (Kpub) of the first terminal and a second item of information which is a function of the fourth cryptogram (KKpub'), then 8) in response to receiving the second information frame (T₁₈₂ ), using the second information contained in the second information frame (T₁₈₂ ), the second electronic lock checks (232) that the third cryptogram (KKpub) stored in its memory is identical to the fourth cryptogram (KKpub'), and
9) in the case where the third and fourth cryptograms (KKpub, KKpub') are identical, the second electronic lock is authorised to move in its unlocked state and, in the case where the third and fourth cryptograms (KKpub, KKpub') are different, movement of the second electronic lock from its locked state to its unlocked state is prohibited.

2. A method according to claim 1, wherein :
- the programming (150) of the first mobile terminal also includes the recording in the memory of this first mobile terminal of a first priority index (Kpr) specifically associated with the first cryptogram (KCpub),
- the method comprises programming (160) the first electronic lock provided to authorise it to be moved in its unlocked state by the first mobile terminal, this programming comprising recording in the memory of the first electronic lock:
- a third cryptogram (KKpub) constructed from the identifier (Cpub) of this first electronic lock, the terminal identifier (Kpub) of the first mobile terminal and by implementing a predetermined encryption algorithm parameterised by the second encryption key (Kaes) of the first mobile terminal, and
- a second priority index (Cpr) specifically associated with the third cryptogram (KKpub),
the second encryption key (Kaes) of the first mobile terminal not being stored in the memory of the first electronic lock so that it is not possible to construct the third cryptogram solely from the information contained in the memory of this first electronic lock, and
- in step 3), the first information frame (T₁₈₀ ) additionally contains the first priority index (Kpr) associated with the first cryptogram (KCpub),
- after step 3) and before step 4), in response to the first electronic lock receiving the first information frame, the first electronic lock searches (190) its memory for a third pre-recorded cryptogram (KKpub) and a second priority index (Cpr) associated with the terminal identifier (Kpub) contained in the first information frame (T₁₈₀ ), then
- when such a second priority index (Cpr) is found in the memory of the first electronic lock, the first electronic lock compares (192) the first priority index (Kpr) contained in the first information frame (T₁₈₀ ) with the second priority index (Cpr) found in the memory of the first electronic lock, and
- when the first priority index (Kpr) is greater than the second priority index (Cpr), the first electronic lock executes step 4) and inhibits the execution of step 7), and
- when the first priority index (Kpr) is lower than the second priority index (Cpr), the first electronic lock executes step 7) and inhibits the execution of step 4).

3. A process according to any one of the preceding claims, wherein :
- the programming (160) of the second electronic lock comprises the transmission to the second electronic lock, by a second of the mobile terminals provided different from the first mobile terminal, of the terminal identifier (Kpub) of the first mobile terminal and of the third cryptogram (KKpub), and
- in response, the second electronic lock stores in its memory the third cryptogram received associated with the terminal identifier (Kpub) of the first terminal.

4. A method according to any one of the preceding claims, wherein the first encryption key is a unique key (Kaes).

5. A process according to any one of the preceding claims, wherein :
- each time the first mobile terminal wishes to move one of the electronic locks provided in its unlocked state, the first mobile terminal and this electronic lock exchange (176) a random number, called "nonce", so that this nonce is known both to the first mobile terminal and to this electronic lock, this nonce varying each time the access control method is carried out between the first mobile terminal and this electronic lock,
- in step 3), the first information frame transmitted contains a first digital signature (S₁₈₀ ) constructed using the terminal identifier (Kpub) of the first terminal and the nonce exchanged, and
- in step 7), the second information frame transmitted contains a second digital signature (S₁₈₂ ) constructed using the terminal identifier (Kpub) of the first terminal and the nonce exchanged.

6. A method according to any one of the preceding claims, wherein the first encryption key of an electronic lock is a unique lock key (Caes) different from all the unique lock keys of the other electronic locks.

7. Method according to any one of the preceding claims, wherein the second encryption key of a mobile terminal is a unique terminal key (Kaes) different from all the unique terminal keys of the other mobile terminals.

8. Building access control system comprising :
- a number of electronic locks (10), each of which can be moved between :
- a locked state in which it prevents access to the building, and
- an unlocked state in which it authorises access to the building,
each electronic lock comprising a microprocessor (108) and a memory (110) containing a lock identifier (Cpub) which uniquely identifies this electronic lock among all the electronic locks of the access control system and a first encryption key (Caes), and
- several opening mobile terminals (16), each of these mobile terminals comprising a microprocessor (40) and a memory (42) containing a terminal identifier (Kpub) which uniquely identifies this mobile terminal among all the mobile terminals of the access control system,
- at least a first of the mobile terminals being authorised to move a first of the electronic locks in its unlocked state, the memory (42) of this first mobile terminal containing for this purpose a first cryptogram (KCpub) and the lock identifier (Cpub) of the first electronic lock associated with this first cryptogram, the first cryptogram (KCpub) being constructed from the terminal identifier (Kpub) of the first terminal, the lock identifier (Cpub) of the first electronic lock and by implementing a predetermined encryption algorithm parameterised by the first encryption key (Caes) of the first electronic lock, the first encryption key not being stored in the memory of the first mobile terminal so that it is not possible to construct this first cryptogram (KCpub) solely from the information contained in the memory of this first mobile terminal,
- the first mobile terminal and the first electronic lock being configured to perform the following steps each time the first mobile terminal wishes to move the first electronic lock into its unlocked state, :
1) the first electronic lock transmits its lock identifier (Cpub) contained in its memory to the first mobile terminal,
2) in response, the first mobile terminal searches its memory to see if there is a first cryptogram (KCpub) associated with the transmitted lock identifier, and
3) when such a first cryptogram (KCpub) is found in the memory of the first mobile terminal, then the first mobile terminal transmits to the first electronic lock a first frame (T₁₈₀ ) of information containing its terminal identifier (Kpub) and a first item of information which is a function of the first cryptogram (KCpub),
4) in response to receiving the first information frame (T₁₈₀ ), the first electronic lock :
- constructs a second cryptogram (KCpub') from the terminal identifier (Kpub) contained in the first information frame, its lock identifier (Cpub) contained in its memory and by implementing the same predetermined encryption algorithm as that implemented to construct the first cryptogram (KCpub) parameterised by the key (Caes) contained in the memory of the first electronic lock, then
- using the first information contained in the first frame (T₁₈₀ ), the first electronic lock checks that the second cryptogram (KCpub') constructed is identical to the first cryptogram (KCpub), and
- if the first and second cryptograms (KCpub, KCpub') are identical, the first electronic lock is authorised to move to its unlocked state and, if the first and second cryptograms (KCpub, KCpub') are different, the first electronic lock is prevented from moving from its locked state to its unlocked state,
**characterised in that** :
- the memory of each of the mobile terminals includes a second encryption key (Kaes) that is different from the first encryption key (Caes), and
- a second of the electronic locks being authorised to be moved in its unlocked state by the first mobile terminal, the memory of this second electronic lock containing a third cryptogram (KKpub) constructed from the identifier (Cpub) of this second electronic lock, the terminal identifier (Kpub) of the first mobile terminal and by implementing a predetermined encryption algorithm parameterised by the second encryption key (Kaes) of the first mobile terminal,
the second encryption key (Kaes) of the first mobile terminal not being stored in the memory of the second electronic lock so that it is not possible to construct the third cryptogram solely from the information contained in the memory of this second electronic lock, and
- the first terminal and the second electronic lock are configured to perform the following steps each time the first mobile terminal wishes to move the second electronic lock into its unlocked state:
5) the second electronic lock transmits its lock identifier (Cpub) to the first mobile terminal,
6) in response, the first mobile terminal searches its memory for a first cryptogram associated with the transmitted lock identifier, then
7) if no first cryptogram associated with the transmitted lock identifier is found in the memory of the first mobile terminal:
- the first mobile terminal constructs a fourth cryptogram (KKpub') from the lock identifier (Cpub) transmitted by the second electronic lock, from its terminal identifier (Kpub) contained in its memory and by implementing the same predetermined encryption algorithm as that implemented to construct the third cryptogram (KKpub) parameterised by the second encryption key (Kaes) contained in the memory of this first mobile terminal, then
- the first mobile terminal transmits to the second electronic lock a second frame (T₁₈₂ ) of information, instead of the first frame (T₁₈₀ ) of information, this second frame of information containing the terminal identifier (Kpub) of the first terminal and a second item of information which is a function of the fourth cryptogram (KKpub'), then 8) in response to receiving the second information frame (T₁₈₂ ), using the second information contained in the second information frame (T₁₈₂ ), the second electronic lock checks (232) that the third cryptogram (KKpub) stored in its memory is identical to the fourth cryptogram (KKpub'), and
9) in the case where the third and fourth cryptograms (KKpub, KKpub') are identical, the second electronic lock is authorised to move in its unlocked state and, in the case where the third and fourth cryptograms (KKpub, KKpub') are different, movement of the second electronic lock from its locked state to its unlocked state is prohibited.

9. First mobile terminal for implementing a building access control system according to claim 8, in which this first mobile terminal comprises a microprocessor (40) and a memory (42) containing a terminal identifier (Kpub) which uniquely identifies this first mobile terminal among all the mobile terminals of the access control system,
- this first mobile terminal being authorised to move a first of the electronic locks of the access control system in its unlocked state, the memory (42) of this first mobile terminal containing for this purpose a first cryptogram (KCpub) and the lock identifier (Cpub) of the first electronic lock associated with this first cryptogram, the first cryptogram (KCpub) being constructed from the terminal identifier (Kpub) of the first terminal, the lock identifier (Cpub) of the first electronic lock and by implementing a predetermined encryption algorithm parameterised by the first encryption key (Caes) of the first electronic lock, the first encryption key not being stored in the memory of the first mobile terminal so that it is not possible to construct this first cryptogram (KCpub) solely from the information contained in the memory of this first mobile terminal,
- the first mobile terminal being configured to perform the following steps each time the first mobile terminal wishes to move the first electronic lock into its unlocked state, :
1) the first mobile terminal receives the lock identifier (Cpub) contained in the memory of the first electronic lock,
2) in response, the first mobile terminal searches its memory to see if there is a first cryptogram (KCpub) associated with the lock identifier received, and
3) when such a first cryptogram (KCpub) is found in the memory of the first mobile terminal, then the first mobile terminal transmits to the first electronic lock a first frame (T₁₈₀ ) of information containing its terminal identifier (Kpub) and a first item of information which is a function of the first cryptogram (KCpub),
**characterised in that** :
- the memory of the first mobile terminal includes a second encryption key (Kaes) different from the first encryption key (Caes),
- the first terminal is configured to perform the following steps each time the first mobile terminal wishes to move the second electronic lock into its unlocked state:
5) the first terminal receives its lock identifier (Cpub) from the second electronic lock,
6) in response, the first mobile terminal searches its memory for a first cryptogram associated with the lock identifier received, then
7) if no first cryptogram associated with the received lock identifier is found in the memory of the first mobile terminal:
- the first mobile terminal constructs a fourth cryptogram (KKpub') from the lock identifier (Cpub) received, from its terminal identifier (Kpub) contained in its memory and by implementing the same predetermined encryption algorithm as that implemented to construct the third cryptogram (KKpub) parameterised by the second encryption key (Kaes) contained in the memory of this first mobile terminal, then
- the first mobile terminal transmits a second frame (T₁₈₂ ) of information to the second electronic lock in place of the first frame (T₁₈₀ ) of information, this second frame of information containing the terminal identifier (Kpub) of the first terminal and a second item of information which is a function of the fourth cryptogram (KKpub') constructed.

10. First terminal according to claim 9, wherein the terminal identifier (Kpub) of this mobile terminal is stored in a non-rewritable area of its memory.

11. A set of first and second electronic locks for implementing a building access control system according to claim 8, wherein the first and second electronic locks (10) are each movable between :
- a locked state in which it prevents access to the building, and
- an unlocked state in which it authorises access to the building,
each of the first and second electronic locks comprising a microprocessor (108) and a memory (110) containing a lock identifier (Cpub) which uniquely identifies this electronic lock among all the electronic locks of the access control system and a first encryption key (Caes), and
- the first electronic lock is configured to perform the following steps each time the first mobile terminal wishes to move the first electronic lock into its unlocked state, :
4) in response to receiving the first information frame (T₁₈₀ ), the first electronic lock :
- constructs a second cryptogram (KCpub') from the terminal identifier (Kpub) contained in the first information frame, its lock identifier (Cpub) contained in its memory and by implementing the same predetermined encryption algorithm as that implemented to construct the first cryptogram (KCpub) parameterised by the key (Caes) contained in the memory of the first electronic lock, then
- using the first information contained in the first frame (T₁₈₀ ), the first electronic lock checks that the second cryptogram (KCpub') constructed is identical to the first cryptogram (KCpub), and
- if the first and second cryptograms (KCpub, KCpub') are identical, the first electronic lock is authorised to move to its unlocked state and, if the first and second cryptograms (KCpub, KCpub') are different, the first electronic lock is prevented from moving from its locked state to its unlocked state,
**characterised in that** :
- the second of the electronic locks is authorised to be moved into its unlocked state by the first mobile terminal, the memory of this second electronic lock containing a third cryptogram (KKpub) constructed from the identifier (Cpub) of this second electronic lock, the terminal identifier (Kpub) of the first mobile terminal and by implementing a predetermined encryption algorithm parameterised by the second encryption key (Kaes) of the first mobile terminal,
the second encryption key (Kaes) of the first mobile terminal not being stored in the memory of the second electronic lock so that it is not possible to construct the third cryptogram solely from the information contained in the memory of this second electronic lock, and
- the second electronic lock is configured to perform the following steps each time the first mobile terminal wishes to move the second electronic lock into its unlocked state:
5) the second electronic lock transmits its lock identifier (Cpub) to the first mobile terminal, then
8) in response to receiving the second information frame (T₁₈₂ ), using the second information contained in the second information frame (T₁₈₂ ), the second electronic lock checks (232) that the third cryptogram (KKpub) stored in its memory is identical to the fourth cryptogram (KKpub'), and
9) in the case where the third and fourth cryptograms (KKpub, KKpub') are identical, the second electronic lock is authorised to move in its unlocked state and, in the case where the third and fourth cryptograms (KKpub, KKpub') are different, movement of the second electronic lock from its locked state to its unlocked state is prohibited.
